# EUROPEAN PATENT SPECIFICATION

(11) **EP 3 917 236 B1**
(45) Date of publication and mention of the grant of the patent: **08.05.2024**
(21) Application number: 19928399.5
(22) Date of filing: 10.05.2019
(51) Int. Cl.: H04W 72/11, H04W 52/02, H04L 5/00, H04W 72/115, H04W 72/51

(54) **DATA TRANSMISSION METHOD, TERMINAL DEVICE AND NETWORK DEVICE**
DATENÜBERTRAGUNGSVERFAHREN, ENDGERÄTEVORRICHTUNG UND NETZWERKVORRICHTUNG
PROCÉDÉ DE TRANSMISSION DE DONNÉES, DISPOSITIF TERMINAL ET DISPOSITIF DE RÉSEAU

(43) Date of publication of application: 01.12.2021
(73) Proprietor: GUANGDONG OPPO MOBILE TELECOMMUNICATIONS CORP., LTD., Dongguan, Guangdong 523860 (CN)
(72) Inventor: XU, Jing, Dongguan, Guangdong 523860 (CN); LIN, Yanan, Dongguan, Guangdong 523860 (CN)
(74) Representative: Novagraaf Technologies
(86) International application number: PCT/CN2019/086483
(87) International publication number: WO 2020/227868

(56) References cited:
- EP-A1- 3 439 407
- WO-A1-2019/088911
- CN-A- 102 215 574
- CN-A- 102 957 491
- CN-A- 109 644 090
- US-A1- 2017 265 171
- ZTE: "SPS enhancements for V2X over Uu", 3GPP DRAFT; R2-163840 SPS ENHANCEMENTS FOR V2X OVER UU, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Nanjing, China; 20160523 - 20160527 22 May 2016 (2016-05-22), XP051105239, Retrieved from the Internet: URL:http://www.3gpp.org/ftp/Meetings_3GPP_ SYNC/RAN2/Docs/ [retrieved on 2016-05-22]

## Description

### TECHNICAL FIELD

Embodiments of the present disclosure generally relate to communication technologies, and more particularly, to data transmission methods, terminal devices, and network devices.

### BACKGROUND

The 5G Industrial interest of Things (IIoT) needs to support the transmission of services such as Factory automation, Transport Industry and Electrical Power Distribution in 5G systems. Based on transmission requirements for delay and reliability, IIoT introduces the concept of Time Sensitive Network (TSN) or Time Sensitive Communication (TSC), and discussions are conducted under TSN network related topics, and the intention is to provide support for TSN service transmissions or IIoT service transmissions in the 5G network.

In TSC, short Semi-Persistent Scheduling (SPS) resources/Configured Grant (CG) resources can be used, or multiple SPS/CG configuration resources can be used to solve the mismatch between the SPS/CG cycle and the TSC service cycle. However, in order to make each service arrival or transmission point have a SPS/CG resource, there will be a situation where more resources are configured than service transmission requirements, which will cause a large amount of pre-configured resources to be idle or wasted. Under such condition, the data for other User Equipment (UE) can be transmitted by the configured SPS/CG resources or resource locations. But, a UE will receive data at all configured SPS/CG locations, and even if the data transmitted on the resources is not the one for the UE, the UE will still demodulate the data part at the resource locations, and put the data in the Hybrid Automatic Repeat-reQuest (HARQ) buffer. This causes unnecessary power loss and the problem that the data cannot be demodulated correctly. In US 2017/0265171 A1 a UE determines whether a downlink channel is present in a subframe, and if the channel is not present, the UE enters a low power mode. The downlink channel comprises an SPS downlink channel.

### SUMMARY

Embodiments of the present disclosure provide a data transmission method, a terminal device and a network device, which can increase resource transmission efficiency. The invention is set out in the appended set of claims.

By using the above technical solutions, when the configured transmission resources do not match the resources required for service transmissions of the terminal device, such as the configured transmission resource locations are more than the resource locations for the service transmissions of the terminal device, the terminal device can select available resources and skippable resources, and the service is not transmitted on the skippable resources, thereby avoiding idle or wasted resources, avoiding power loss of terminal device, and improving resource utilization.

### BRIEF DESCRIPTION OF THE DRAWINGS

FIG 1 is a schematic diagram of communication system architecture according to an embodiment of the present disclosure.
FIG 2 is a schematic diagram showing a resource period and a service period according to an embodiment of the present disclosure.
FIG 3 is a schematic diagram showing another resource period and another service period according to an embodiment of the present disclosure.
FIG 4 is a schematic flowchart of a data transmission method according to an embodiment of the present disclosure.
FIG 5 is schematic flowchart of a data transmission method according to an embodiment of the present disclosure.
FIG 6 is a schematic block diagram of a terminal device according to an embodiment of the present disclosure.
FIG 7 is a schematic block diagram of a network device according to an embodiment of the present disclosure.
FIG 8 is a schematic block diagram of a communication device according to an embodiment of the present disclosure.
FIG 9 is a schematic block diagram of a chip according to an embodiment of the present disclosure.
FIG 10 is a schematic diagram of a communication system according to an embodiment of the present disclosure.

### DETAILED DESCRIPTION

The technical solutions of embodiments of the present disclosure can be applied to various communication systems, such as: a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, a LTE Frequency Division Duplex (FDD) system, a LTE Time Division Duplex (TDD) system, a Universal Mobile Telecommunication System (UMTS), a Worldwide Interoperability for Microwave Access (WiMAX) communication system or a 5G system, etc.

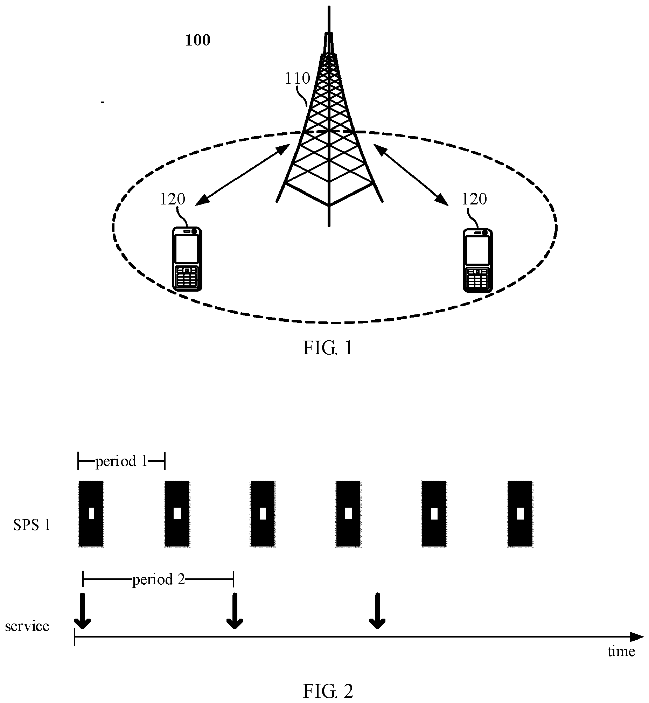

As an example, the communication system 100 applied in embodiments of the present disclosure may be as shown in FIG 1. The communication system 100 includes a network device 110, and the network device 110 may be a device that communicates with a terminal device 120 (or called a communication terminal or a terminal). The network device 110 can provide communication coverage for a specific geographic area, and can communicate with terminal devices in the coverage area. According to embodiments, the network device 110 may be a base station (Base Transceiver Station, BTS) in a GSM system or a CDMA system, a base station (NodeB, NB) in a WCDMA system, an evolved base station ( Evolutional Node B, eNB or eNodeB) in an LTE system, or a wireless controller in a Cloud Radio Access Network (CRAN), or the network device may be a mobile switching center, a relay station, an access point, an on-vehicle device, a wearable device, a hub, a switch, a network bridge, a router, a network side device in a 5G network, or a network device in a future evolved Public Land Mobile Network (PLMN), etc.

The communication system 100 also includes at least one terminal device 120 within the coverage area of the network device 110. The "terminal device" as used herein may be connected in the following manners (including but not limited to): the terminal device may be connected via wired lines, such as via Public Switched Telephone Networks (PSTN), Digital Subscriber Line (DSL), digital cables, and direct cable connections; and/or the terminal may be connected via another data connection/network; and/or the terminal device may be connected via a wireless interface, such as cellular networks, wireless local area network (WLAN), digital TV networks such as DVB-H networks, satellite networks, AM-FM A broadcast transmitter; and/or the terminal device is connected via a device of another terminal device which is configured to receive/send communication signals; and/or the terminal device is connected via an Internet of Things (IoT) device. A terminal device set as communicating through a wireless interface may be referred to as a "wireless communication terminal", a "wireless terminal" or a "mobile terminal". Examples of the mobile terminal include but are not limited to: satellite or cellular phone; Personal Communications System (PCS) terminal that can integrate a cellular radio phone with data processing, fax, and data communication capabilities; a PDA which can include a radio phone, a pager, an Internet/intranet access, a Web browser, a memo pad, a calendar, and/or Global Positioning System (GPS) receiver; and conventional laptop and/or palmtop receivers or other electronic device including a radio telephone transceiver. The terminal device can refer to access terminal, User Equipment (UE), user unit, user station, mobile station, mobile device, remote station, remote terminal, mobile equipment, user terminal, terminal, wireless communication equipment, user agent or user device. The access terminal can be a cellular phone, a cordless phone, a Session Initiation Protocol (SIP) phone, a Wireless Local Loop (WLL) station, a Personal Digital Assistant (PDA), a handheld device with wireless communication functions, a computing device or other processing device connected to a wireless modem, an in-vehicle device, a wearable devices, a terminal device in 5G networks, or a terminal device in the future evolved PLMN, etc.

According to embodiments, Device to Device (D2D) communication may be performed between the terminal devices 120.

According to embodiments, the 5G system or 5G network may also be referred to as a New Radio (NR) system or NR network.

FIG 1 exemplarily shows one network device and two terminal devices. According to other embodiments, the communication system 100 may include multiple network devices and the coverage of each network device may include other numbers of terminal devices, and embodiments of the present disclosure do not impose specific limitations on this.

According to embodiments, the communication system 100 may also include other network entities such as a network controller and a mobility management entity, and embodiments of the present disclosure do not impose specific limitations on this.

It should be understood that the devices with communication functions in the network/system in embodiments of the present disclosure may be referred to as communication devices. Taking the communication system 100 shown in FIG 1 as an example, the communication devices may include the network device 110 and the terminal devices 120 with communication functions, and the network device 110 and the terminal devices 120 may be the devices described above, which will not be repeated here. The communication devices may also include other devices in the communication system 100, such as other network entities such as a network controller or a mobility management entity, and embodiments of the present disclosure do not impose specific limitations on this.

It should be understood that the terms "system" and "network" are often used interchangeably herein. The term "and/or" herein describes an association relationship between associated objects, which means that there can be three relationships, for example, "A and/or B" can mean: A exists only, both A and B exist, B exists only. In addition, the character "/" herein generally indicates that the associated objects before and after "/" are in an "or" relationship.

The TSN network supports smart grid and other services. These services are usually definitive periodic services, and in order to reduce the Physical Downlink Control Channel (PDCCH) overhead, to avoid the reliability problem of PDCCH reception and the power loss problem of PDCCH reception, semi-static scheduling can be used for resource scheduling or configuration transmission of this type of services, for example, using CG resources or using SPS resources. However, for some TSC services, the period of the services is not multiple times the symbol length or multiple times the subframe length, that is, the values of the service period and the period of the SPS/CG resource configuration do not match. For example, in a smart grid scenario, the period of the service is 0.833 ms or 16.667 ms, and the two periods are not integer multiples of the symbol length, and they are not integer multiples of the subframe length.

Currently, multiple SPS/CG configuration resources and short SPS/CG configuration resources are usually used to reduce the problem of mismatch between the service period and the SPS/CG configuration period. For example, for short SPS resources, the period can be as low as 0.5ms.

As shown in FIG 2, taking SPS resources as an example, it is supposed that a network device allocates a group of SPS resources to a terminal device, that is, SPS 1 as shown in FIG 2, and it is assumed that the period is period 1 as shown in FIG 2. In addition, the period of the corresponding transmitted TSC service is period 2 as shown in FIG 2. Period 1 and period 2 are not equal. The terminal device can select resources in SPS 1 to transmit corresponding service data according to the relationship between period 1 and period 2.

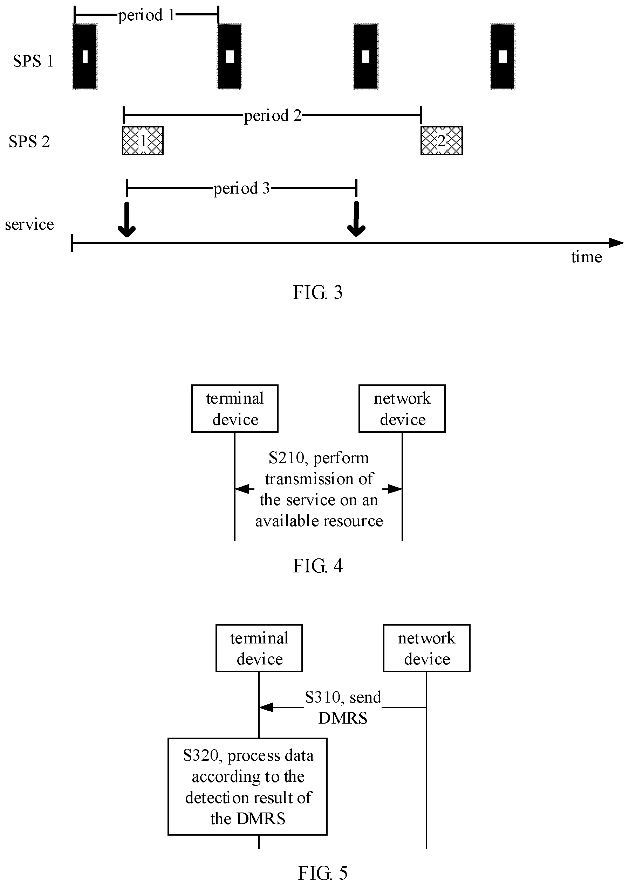

For another example, as shown in FIG 3, in order to improve the transmission efficiency of the TSC service, a network device may also allocate multiple groups of resources to a terminal device. As shown in FIG 3, it is supposed that the network device allocates two groups of SPS resources to the terminal device, namely SPS 1 and SPS 2 as shown in FIG 3, and it is supposed that the period of SPS 1 is period 1, and the period of SPS 2 is period 2. In addition, the period of the corresponding transmitted TSC service is period 3 as shown in FIG 3. As shown in FIG 3, period 1, period 2, and period 3 are not equal. The terminal device can select appropriate resources in SPS 1 and SPS 2 to transmit the corresponding service according to the relationship between the service period and the resource periods. In this way, compared with one group of SPS resources as shown in FIG 2, the transmission efficiency of the TSC service can be further improved.

But, in TSC, when the short SPS/CG configuration and/or multiple SPS/CG configurations are used to solve the problem of mismatch between the SPS/CG period and the service period, in order to make each service arrival or transmission point have SPS/CG resources, there will be a situation where more resources are configured than required for service transmissions, which will cause a large amount of pre-configured resources to be idle or wasted. Therefore, how to solve the waste of resources and how to deal with SPS/CG resources on which there is no service transmission are problems that need to be considered.

For example, data for other UEs can be transmitted by the configured SPS/CG resources or resource locations. But, a UE will receive data at all configured SPS/CG locations, and even if the data transmitted on the resources is not the one for the UE, the UE will still demodulate the data part at the resource locations, and put the data in the Hybrid Automatic Repeat-reQuest (HARQ) buffer. This causes unnecessary power loss and the problem that the data cannot be demodulated correctly.

In view of the above, embodiments of the present disclosure propose a method for transmitting data, which can avoid the aforementioned problems of idle resources (unused resources) or waste of SPS/CG resources, and improve resource utilization.

FIG 4 is a schematic flowchart of a data transmission method 200 according to an embodiment of the present disclosure. As shown in FIG 4, the method 200 includes:

In S210, a target service is transmitted on an available resource. Specifically, a terminal device and/or a network device performs transmission of the target service on the available resource in a transmission resource set, and does not transmit the target service on a skipable resource in the transmission resource set. The transmission resource set is configured by the network device for the terminal device.

It should be understood that the method 200 may be performed by the network device and/or the terminal device. The network device may be the network device shown in FIG 1, and the terminal device may be any terminal device shown in FIG 1.

In claimed embodiments of the present disclosure, the network device configures a transmission resource set for the terminal device. Some terminal devices can be configured with the same transmission resource set, which can avoid waste; some terminal devices can be configured with different transmission resource set resources, and in this way, conflicts between resources used by UEs can be avoided; or, the network device can schedule different resources for different terminal devices, but the resource locations for different terminal devices conflict. The resources in the transmission resource set may be uplink resources and/or downlink resources. For example, the transmission resource set may include SPS resources and/or CG resources. Alternatively, the resources in the transmission resource set may be dynamically scheduled resources, for example, group scheduling. The transmission resource set can be configured in both uplink and downlink, or transmission resource set for uplink or downlink can be configured separately.

In embodiments of the present disclosure, the network device configures a transmission resource set for the terminal device. The one or more groups of transmission resources included in the transmission resource set may be periodic resources. According to some embodiments, the transmission resource set may include one or more groups of periodic resources. For example, assuming that the resources in the transmission resource set are SPS resources, as shown in FIG 2, the transmission resource set may include only one group of SPS resources; or, as shown in FIG 3, the transmission resource set may include multiple groups of SPS resources, for example, two groups of SPS resources. Alternatively, the transmission resource set may include one or more groups of resources configured by the network device using a resource pattern, such as locations of one or more groups of transmission resources given by the network device through a bitmap. If the transmission resource set includes multiple groups of periodic transmission resources, the periods of different transmission resource groups may be the same or different, and embodiments of the present disclosure do not impose specific limitations on this.

The target service in embodiments of the present disclosure may refer to any service or service data. For example, the target service may be any TSC service. The target service may be a periodic service, for example, the periodic service as shown in FIG 2 and FIG 3; or, the target service may be a non-periodic service, and embodiments of the present disclosure do not impose specific limitations on this.

The target service in embodiments of the present disclosure may refer to any logical channel or data of any logical channel. Alternatively, the target service in embodiments of the present disclosure may refer to a specific logical channel or specific logical channel data. For example, the target service may be a logical channel with a specific priority or a logical channel with specific identification. For example, the target service refers to a logical channel with a high priority, a logical channel corresponding to a specific service, a logical channel that has a specific logical channel and resource mapping condition (for example, a logical channel matching the Logical Channel Prioritization (LCP) mapping restriction of a corresponding resource, and the logical channel can be specifically a logical channel that can be transmitted on a specific resource), and embodiments of the present disclosure are not limited to this.

In embodiments of the present disclosure, the method 200 further includes: the terminal device and/or the network device determining whether there exist a skippable resource and/or an available resource in the transmission resource set according to reference information, or determining the available resource and/or skippable resource in the transmission resource set according to the reference information, i.e., determining which resources in the transmission resource set are available resources and which are skippable resources.

According to some embodiments, the reference information may be network-configured, pre-configured, or saved by the terminal device or acquired by the terminal device itself.

For ease of explanation, the reference information is described here from the perspective of the terminal device, and correspondingly, the network device can also use the reference information. Specifically, the reference information may include at least one of the following information: configuration information for the transmission resource set, wherein the configuration information includes information or a parameter used to indicate resources in the transmission resource set; a mapping relationship between resources in the transmission resource set and at least one service, wherein the at least one service includes the target service; a mapping relationship between resources in the transmission resource set and at least one logical channel, wherein the at least one logical channel includes a logical channel for carrying the target service; a period of the target service; a detection result of a Demodulation Reference Signal (DMRS) corresponding to resources in the transmission resource set; whether the terminal device receives indication information sent by a network device, wherein the indication information is used to indicate whether the terminal device is allowed to not perform transmission of the target service on a part of resources in the transmission resource set; whether the terminal device supports not performing transmission of the target service on a part of resources in the transmission resource set (or in other words, whether the terminal device supports skipping of transmission of the target service on a part of resources in the transmission resource set); or whether the terminal device sends capability information to the network device, wherein the capability information is used to indicate whether the terminal device has a capability of not performing transmission of the target service on a part of resources in the transmission resource set.

Specifically, the reference information may include configuration information for the transmission resource set, and the configuration information includes information or a parameter used to indicate resources in the transmission resource set. Configuring the transmission resource set by the network device for the terminal device includes: sending, by the network device, resource configuration information to the terminal device. The configuration information is used to indicate related information or parameters of the resources in the transmission resource set, so that the configuration information can be used to indicate the terminal device to determine the transmission resource set or the transmission resource locations. For example, the configuration information may include the period of each group of transmission resources in at least one group of periodic transmission resources included in the transmission resource set. For another example, the configuration information may include a resource pattern used to indicate one or more groups of transmission resources, for example, a pattern or a bitmap may be used to indicate one or more groups of resources (which may include available resources and/or skippable resources). For another example, the configuration information may also include other information or parameters of the transmission resource set, for example, may include at least one of the frequency domain range of the resources in the transmission resource set, the duration in the time domain, the logical channels that can be carried, and MCS parameters, but embodiments of the present disclosure are not limited thereto.

The reference information may include a mapping relationship between resources in the transmission resource set and at least one service, and the at least one service includes the target service. Specifically, the transmission resource set configured by the network device for the terminal device may be used to transmit one or more services. Assuming that the resources in the transmission resource set are used to transmit a service, for example, to transmit the target service, the mapping relationship between the transmission resource set and at least one service is that the resources in the transmission resource set correspond to the target service; or, at least part of the resources in the transmission resource set correspond to the target service, and all resources are not used to transmit other services. Assuming that the resources in the transmission resource set are used to transmit multiple services, the network device can configure the mapping relationship between the resources in the transmission resource set and multiple services for the terminal device, that is, a part of the resources in the transmission resource set are used to transmit the target service, and another part of the resources can be used to transmit one or more other services; or, another part of the resources are skippable resources. Therefore, the terminal device can determine the resource(s) corresponding to the target service according to the mapping relationship, and can also determine the resource(s) that do(does) not correspond to the target service. The resource(s) not corresponding to the target service, or resource(s) that correspond(s) to the target service but are(is) not used by the target service, can be determined as skippable resources for the target service.

The reference information may include a mapping relationship between the transmission resource set and at least one logical channel, and the at least one logical channel includes a logical channel used to carry the target service; or in other words, the reference information may include the mapping relationship between the transmission resource set and at least one logical channel, and the at least one logical channel includes a logical channel used to carry a specific priority or identifier, or a logical channel with a high priority. Specifically, the mapping relationship may include at least one of the priorities, indexes, and identifiers of the resources in the transmission resource set; the mapping relationship may also include at least one of the priority, index, and identifier of the at least one logical channel. For example, the mapping relationship between the transmission resource set and the at least one logical channel may include a corresponding relationship between the priorities of the resources in the transmission resource set and the priority of the at least one logical channel. According to some embodiments, the mapping relationship may be configured by the network device for the terminal device, or may be specified by a protocol, or the terminal device and the network device may, based on priorities, indexes, or identifiers of the resources in the transmission resource set and the at least one logical channel, determine the corresponding relationship between them. For example, the terminal device and the network device may, based on the priorities of the resources in the transmission resource set and the priority of the at least one logical channel, determine the corresponding relationship between the priorities of the resources in the transmission resource set and the priority of the at least one logical channel. Alternatively, the terminal device and the network device can determine the corresponding relationship between the resources in the transmission resource set and the at least one logical channel based on the carrying relationship or mapping restrictions between the resources in the transmission resource set and the at least one logical channel. For example, according to the identifier or priority of a list of resources that the configured logical channel(s) can be mapped to, the corresponding relationship between the resources in the transmission resource set and the at least one logical channel can be determined. According to the mapping relationship between the transmission resource set and the at least one logical channel, the terminal device determines the transmission resource corresponding to the logical channel used to carry the target service and the transmission resource corresponding to the logical channel not used to carry the target service. The transmission resource(s) corresponding to the logical channel not used to carry the target service, or the transmission resource(s) that correspond(s) to the logical channel for the target service but is(are) not used by the logical channel, can be determined as the skippable resources for the target service.

The reference information may include the period of the target service. Specifically, if the target service is a periodic service, the network device may send the period of the target service to the terminal device, so that the terminal device can determine the skippable resources according to the period of the target service. According to some embodiments, the reference information may also include the arrival time of the target service.

In addition, for the situation where the terminal device receives downlink data, the reference information may also include the detection result of the DMRS corresponding to the resources in the transmission resource set. Specifically, the network device configures a transmission resource set for the terminal device, and the terminal device can detect DMRS on each resource in the transmission resource set. The terminal device determines whether there is a skippable resource according to the detection result of the DMRS, or in other words, the terminal device determines the skippable resource in the transmission resource set. For example, if a terminal device detects a DMRS corresponding to a resource and determines that the resource belongs to the terminal device, the terminal device can determine that the resource is an available resource, and the terminal device can receive the data carried on the resource; if the terminal device detects a DMRS corresponding to a certain resource and determines that the resource does not belong to the terminal device, the terminal device may determine that the resource is a skippable resource, and the terminal device may not receive the data carried on the resource. For example, for the skippable resource, the terminal device may not receive and/or demodulate the data in the Physical Downlink Shared Channel (PDSCH) carried by the resource, and/or may not store the data in the HARQ process; or, the terminal device may demodulate the data carried in the resource, but discard the demodulated data, and/or not store the data in the corresponding HARQ process.

The reference information may include whether the terminal device has received the indication information sent by the network device. The indication information is used by the network device to indicate whether the terminal device is capable of not performing transmission of the target service on a part of the resources in the transmission resource set. The network device can send the indication information to the terminal device, and the terminal device determines whether the network device allows the terminal device not to transmit the target service on some resources in the transmission resource set according to the indication information, or determines whether there is a skippable resource in the transmission resource set, that is, determines whether the terminal device may not transmit the target service on at least part of the resources in the transmission resource set. For example, the indication information may be Skip Downlink Rx SPS indication information. If the Skip Downlink Rx SPS indication is true, it means that the network device allows the terminal device not to transmit the target service on some of the resources in the transmission resource set.

The reference information may include whether the terminal device supports not performing transmission of the target service on a part of the resources in the transmission resource set. For example, the reference information may include: whether the terminal device supports the transmission of the target service on at least some of the resources in the transmission resource set, while not performing transmission of the target service on at least some of the resources.

The reference information may include whether the terminal device sends capability information to the network device. The capability information is used to indicate whether the terminal device has the capability of not performing transmission of the target service on a part of the resources in the transmission resource set. The terminal device may send to the network device the capability information regarding whether the terminal device has the capability of not performing transmission of the target service on at least part of the resources in the transmission resource set. According to the capability information, the network device can determine whether there is a skippable resource for the target service in the transmission resource set, and/or whether the network device can configure the UE as not performing transmission or detection on a part of the resources.

It should be understood that the information that may be included in the reference information can be used alone, that is, the reference information may only include one piece of the above information; or the above information can be used in combination, that is, the reference information may include multiple pieces of the above information, and embodiments of the present disclosure do not impose specific limitation on this.

In embodiments of the present disclosure, the method 200 may further include: when the terminal device and/or the network device meets a first condition, determining that there is the skippable resource and/or the available resource in the transmission resource set. In other words, the terminal device and/or network device can determine the skippable resource and/or the available resource in the transmission resource set according to the first condition. That is, according to the first condition, the terminal device and/or network device can determine which resources in the transmission resource set are available resources and which resources are skippable resources.

For ease of description, the first condition will be described below from the perspective of the terminal device, and the following description is also applicable for the network device side. Specifically, the first condition may include at least one of the following conditions: the first condition includes at least one of the following conditions that:
if a period of a first transmission resource group in the at least one group of periodic transmission resources is smaller than or equal to a period of the target service, the skippable resource is determined in the first transmission resource group;
if a period of a first transmission resource group in the at least one group of periodic transmission resources is a non-integer multiple of a period of the target service, the skippable resource is determined in the first transmission resource group;
according to a mapping relationship between resources in the transmission resource set and at least one service, if a second transmission resource group in the transmission resource set does not correspond to the target service, the second transmission resource group is determined as the skippable resource, wherein the at least one service includes the target service;
according to a mapping relationship between resources in the transmission resource set and at least one service, if a second transmission resource group in the transmission resource set corresponds to the target service, the skippable resource is determined in the second transmission resource group, wherein the at least one service includes the target service;
according to a mapping relationship between resources in the transmission resource set and at least one logical channel, if a third transmission resource group in the transmission resource set does not correspond to a logical channel where the target service is, the third transmission resource group is determined as the skippable resource, wherein the at least one logical channel includes a logical channel used to carry the target service;
according to a mapping relationship between resources in the transmission resource set and at least one logical channel, if a fourth transmission resource group in the transmission resource set corresponds to a logical channel where the target service is, the skippable resource is determined in the fourth transmission resource group, wherein the at least one logical channel includes a logical channel used to carry the target service;
a DMRS corresponding to a target resource in the transmission resource set is detected, and if a DMRS detection result indicates that the target resource belongs to the terminal device, the target resource is determined as the avialable resource; if the DMRS detection result indicates that the target resource does not belong to the terminal device, the target resource is determined as the skippable resource;
resources in the transmission resource set are more than resources required by the target service;
indication information sent from the network device is received, wherein the indication information indicates that the terminal device is capable of not performing transmission of the target service on a part of resources in the transmission resource set;
the terminal device supports not performing transmission of the target service on a part of resources in the transmission resource set; or
the terminal device sends capability information to the network device, wherein the capability information is used to indicate that the terminal device has a capability of not performing transmission of the target service on a part of resources in the transmission resource set.

For example, the first condition may include: if the period of a first transmission resource group in the at least one group of periodic transmission resources is smaller than or equal to the period of the target service, the skippable resource is determined in the first transmission resource group. Specifically, the terminal device may determine the skippable resource in the transmission resource set according to the period of the target service and the period of the at least one group of periodic transmission resources. Taking any periodic transmission group in the transmission resource set as an example, which is called the first transmission resource group here, it is assumed that the period of the first transmission resource group does not match the period of the target service, for example, the period of the first transmission resource group is smaller than or equal to the period of the target service, then there exists a skippable resource in the first transmission resource group.

Similarly, the first condition may include: if the period of the first transmission resource group in the at least one group of periodic transmission resources is a non-integer multiple of the period of the target service, the skippable resource is determined in the first transmission resource group.

For example, as shown in FIG 2, it is supposed that the first transmission resource group is SPS 1, its period is period 1, and the period of the corresponding target service is period 2. Period 1 is smaller than period 2, and period 2 is not an integer multiple of period 1, then there exists a skippable resource for the target service in SPS 1. As shown in FIG 2, according to the relationship between the two periods, it can be determined that the first resource block 1 in the SPS 1 in FIG 2 is an available resource, and the second resource block 2 is a skippable resource.

For example, as shown in FIG 3, it is supposed the first transmission resource group is SPS 1, its period is period 1, and the period of the corresponding target service is period 3. In addition, the transmission resource set also includes another group of transmission resources SPS 2, and its period is period 2. According to FIG 3, it can be seen that period 1 is smaller than period 3, and period 3 is not an integer multiple of period 1, then there is a skippable resource for the target service in the SPS 1. As shown in FIG 3, due to the existence of SPS 2, and according to the relationship between the period of SPS 2 and the period of the service, it can be determined that the first resource block in SPS 2 in FIG 3 is an available resource, the first resource block 1 in SPS 1 is a skippable resource, the second resource block 2 is also a skippable resource, and the third resource block 3 in SPS 1 is an available resource.

The first condition may include: if the resource locations of the first transmission resource pattern group in the at least one group of transmission resource patterns include the resource required by the target service, the skippable resource is determined in the first transmission resource pattern group. Specifically, the terminal device may determine the skippable resource in the transmission resource set according to the period of the target service and the at least one group of transmission resource patterns. Especially, for aperiodic resources in the transmission resource set, for example, a resource pattern indicating one or more groups of resources, the terminal device can determine the skippable resources according to the configuration information for the one or more groups of resources.

The first condition may include: according to the mapping relationship between the transmission resource set and at least one service, if a second transmission resource group in the transmission resource set does not correspond to the target service, it is determined that the second transmission resource group is the skippable resource, and the at least one service includes the target service.

Correspondingly, the first condition may also include: according to the mapping relationship between the resources in the transmission resource set and at least one service, if the second transmission resource group in the transmission resource set corresponds to the target service, the skippable resource is determined in the second transmission resource group, and the at least one service includes the target service.

Specifically, the two conditions regarding the second transmission resource group are applicable to related descriptions in which the parameter information includes the mapping relationship between the transmission resource set and the at least one service. For brevity, details are not repeated here. For example, the second transmission resource group here is any group of transmission resources in the transmission resource set, and the transmission resource group may include multiple second transmission resource groups. According to the mapping relationship, if the second transmission resource group corresponds to the target service, the second transmission resource group may include available resources and/or skippable resources. For example, the terminal device may make further determinations through other conditions or information; but if the second transmission resource group does not correspond to the target service, the second transmission resource group is determined as a skippable resource for the target service.

The first condition may include: according to the mapping relationship between the transmission resource set and at least one logical channel, if the third transmission resource group in the transmission resource set does not correspond to the logical channel where the target service is, the third transmission resource group is determined as the skippable resource. The at least one logical channel includes a logical channel for carrying the target service. In other words, the at least one logical channel includes a logical channel for carrying a specific priority or identifier, or a logical channel with a high priority.

Correspondingly, the first condition may also include: according to the mapping relationship between resources in the transmission resource set and at least one logical channel, if the third transmission resource group in the transmission resource set corresponds to the logical channel where the target service is, the skippable resource is determined in the third transmission resource group. The at least one logical channel includes a logical channel used to carry the target service, or in other words, the at least one logical channel includes a logical channel used to carry a specific priority or identifier.

Similarly, the two conditions regarding the third transmission resource group are applicable to the related description in which the parameter information includes the mapping relationship between the transmission resource set and the at least one logical channel. For brevity, details are not described herein again. For example, the third transmission resource group here is any group of periodic transmission resources in the transmission resource set, and the transmission resource group may include multiple third transmission resource groups. According to the mapping relationship, if the logical channel corresponding to the third transmission resource group is used to carry the target service, the third transmission resource group may include available resources and/or skippable resources. For example, the terminal device may further determine which resources are available or skippalbe resources using other conditions or information; but if the logical channel corresponding to the third transmission resource group is not used to carry the target service, then the third transmission resource group is determined as a skippable resource for the target service.

The first condition may include: a DMRS corresponding to a target resource in the transmission resource set is detected, and if the DMRS detection result indicates that the target resource does not belong to the terminal device, the target resource is the skippable resource. Specifically, this condition is applicable to the related description in which the parameter information includes the terminal device detecting the DMRS corresponding to the target resource in the transmission resource set. For the sake of brevity, it will not be repeated here. For example, the terminal device detects the DMRS corresponding to any resource in the transmission resource set, which is referred to herein as the target resource, if the DMRS detection result indicates that the target resource belongs to the terminal device, the target resource may be the available resource for the target service, for example, the terminal device may make further determination based on other conditions or information; if the DMRS detection result indicates that the target resource does not belong to the terminal device, the terminal device may determine that the target resource is a skippable resource for the target service.

The first condition may include: there are more resources in the transmission resource set than resources required by the target service. Specifically, the terminal device may determine the skippable resource in the transmission resource set according to the number of resources required by the target service and the number of resources in the transmission resource set. For example, the terminal device may determine the number of resources required by the target service according to the period of the target service, or may also determine the number of the resources in the transmission resource set according to the period of each transmission resource group in the transmission resource set. If there are more resources in the transmission resource set than resources required by the target service, it may be determined that there are skippable resources in the transmission resource set, and which resources in the transmission resource set are the skippable resources may be further determined.

For another example, the terminal device may also determine the skippable resource in the transmission resource set according to the number of resources required by the target service and the number of resources already used in the transmission resource set. Specifically, the terminal device determines the number of resources in the transmission resource set and the number of resources required for the target service data. If some of the resources in the transmission resource set have received all target service data, the remaining resources are all skippable resources. For example, assuming that eight SPS resources are configured within 80 ms, the network device indicates the terminal device that or the terminal device determines that only three resources are used for transmitting the target service according to other information. After receiving the first five resources, if the terminal device determines that three pieces of data for transmitting the target service of the terminal device have been received, then the last three resources are skippable resources.

The first condition may include: the indication information sent from the network device is received and the indication information indicates that the terminal device is capable of not performing transmission of the target service on some resources in the transmission resource set. Specifically, this condition is applicable to the relevant description in which the parameter information includes sending the indication information by the network device. For the sake of brevity, repeated descriptions are omitted here. For example, if the terminal device receives the indication information sent by the network device, and the indication information indicates that the terminal device is capable of not performing transmission of the target service on some of the resources in the transmission resource set, that is, the network device allows the terminal device not to transmit the target service on a part of the resources in the transmission resource set, the terminal device can determine that there are skippable resources in the transmission resource set. For another example, the network device may also indicate the locations of the skippable resources through the indication information. According to some embodiments, the network device indicates the locations of available resources and/or skippable resources by a pattern or bitmap. Correspondingly, for each resource or for some specific resources in the resource set, a pattern or bitmap can also be used to indicate whether each resource location is available by one bit.

The first condition may include: the terminal device supports not to transmit the target service on some resources in the transmission resource set. Specifically, this condition is applicable to relevant descriptions in which the parameter information includes whether the terminal device supports not performing transmission of the target service on a part of the resources in the transmission resource set. For the sake of brevity, details are not repeated here. For example, if the terminal device supports not performing transmission of the target service on some of the resources in the transmission resource set, the terminal device can determine the skippable resource in the transmission resource set, and if terminal device does not support not performing transmission of the target service on some of the resources in the transmission resource set, all the resources in the transmission resource set are available resources.

The first condition may include: the terminal device sends the capability information to the network device, and the capability information is used to indicate that the terminal device has the capability of not performing transmission of the target service on some resources in the transmission resource set. Specifically, this condition is applicable to the related description in which the parameter information includes the terminal device sends the capability information. For brevity, repeated descriptions are omitted here. For example, if the terminal device sends the capability information to the network device, and the capability information indicates that the terminal device has the capability of not performing transmission of the target service on some of the resources in the transmission resource set, the terminal device may determine the skippable resources in the transmission resource set. If the capability information indicates that the terminal device does not have the capability, all resources in the transmission resource set are available resources. According to some embodiments, the terminal indicates the locations of available resources and/or skippable resources to the network side.

It should be understood that conditions that may be included in the first condition in embodiments of the present disclosure can be used alone, or can be used in combination with each other, or combined with other conditions as appropriate. For example, if the first condition includes multiple conditions, a resource can be determined as a skippable resource when each condition is met; alternatively, a resource can be determined as a skippable resource when at least one condition is met. Embodiments of the present disclosure do not impose specific limitations on this.

It should be understood that the skippable resource in embodiments of the present disclosure may also be referred to as skip resources, such as skip SPS/CG resources, or the skippable resource can also be referred to as skipped resource, for example, skipped SPS/CG resource.

It should be understood that the skippable resource determined by the network device and/or the terminal device in embodiments of the present disclosure refers to the skippable resource for the target service, that is, the target service is not transmitted on the skippable resource. Specifically, taking the terminal device as an example, the terminal device not performing transmission of the target service on the skippable resource may include at least one of the following situations: the terminal device determines not to send the target service on the skippable resource; the terminal device determines not to receive the target service on the skippable resource (as claimed); the terminal device determines not to detect the target service on the skippable resource; or the terminal device determines not to receive the PDSCH corresponding to the target service on the skippable resource. For example, assuming that the skippable resource is a downlink resource, not performing transmission of the target service on the skippable resource may include at least one of the following: the terminal device does not receive the target service on the skippable resource; the terminal device does not demodulate or decode the target service on the skippable resource; the terminal device does not detect whether the target service exists on the skippable resource; correspondingly, the terminal device may not store the data on the skippable resource in the HARQ process, thereby reducing power consumption.

According to some embodiments, the skippable resource for the target service may be an available resource or a skippable resource for other services. That is, the skippable resource for the target service can also be used to transmit other services, or the skippable resource for the target service is not used to transmit any service, and embodiments of the present disclosure are not limited to this.

In embodiments of the present disclosure, for the case that the resources in the transmission resource set are uplink resources, for example, the resources in the transmission resource set are CG resources, the method 200 may further include: the terminal device determining not to generate Media Access Control (MAC) Packet Data Unit (PDU) at the MAC layer, and the MAC PDU corresponds to the skippable resource. In other words, if the terminal device determines that a resource can be skipped, the MAC layer does not generate a corresponding MAC PDU.

According to some embodiments, the terminal device may determine the skippable resource according to a second condition, that is, determine not to generate the corresponding MAC PDU at the MAC layer. The second condition may include at least one of the following conditions that:
if a period of a first transmission resource group in the at least one group of periodic transmission resources is smaller than or equal to a period of the target service, the skippable resource is determined in the first transmission resource group;
if a period of a first transmission resource group in the at least one group of periodic transmission resources is a non-integer multiple of a period of the target service, the skippable resource is determined in the first transmission resource group;
according to a mapping relationship between resources in the transmission resource set and at least one service, if a second transmission resource group in the transmission resource set does not correspond to the target service, the second transmission resource group is determined as the skippable resource;
according to a mapping relationship between resources in the transmission resource set and at least one service, if a second transmission resource group in the transmission resource set corresponds to the target service, the skippable resource is determined in the second transmission resource group, wherein the at least one service includes the target service;
according to a mapping relationship between resources in the transmission resource set and at least one logical channel, if a third transmission resource group in the transmission resource set does not correspond to a logical channel where the target service is, the third transmission resource group is determined as the skippable resource, wherein the at least one logical channel includes a logical channel used to carry the target service, or in other words, the at least one logical channel includes a logical channel for carrying a specific priority or identifier or a logical channel with a high priority;
according to a mapping relationship between resources in the transmission resource set and at least one logical channel, if a third transmission resource group in the transmission resource set corresponds to a logical channel where the target service is, the skippable resource is determined in the third transmission resource group, wherein the at least one logical channel includes a logical channel used to carry the target service, or in other words, the at least one logical channel includes a logical channel for carrying a specific priority or identifier or a logical channel with a high priority;
a DMRS corresponding to a target resource in the transmission resource set is detected, and if a DMRS detection result indicates that the target resource belongs to the terminal device, the target resource is determined as an available resource; if the DMRS detection result indicates that the target resource does not belong to the terminal device, the target resource is determined as the skippable resource ;
resources in the transmission resource set are more than resources required by the target service;
indication information sent from the network device is received, wherein the indication information indicates that the terminal device is capable of not performing transmission of the target service on a part of resources in the transmission resource set;
the terminal device supports not performing transmission of the target service on a part of resources in the transmission resource set; or
the terminal device sends capability information to the network device, wherein the capability information is used to indicate that the terminal device has a capability of not performing transmission of the target service on a part of resources in the transmission resource set.

It should be understood that the conditions that may be included in the second condition are the same as the conditions that may be included in the first condition, and for the sake of brevity, details are not repeated here. However, the first condition in embodiments of the present disclosure may be set to be the same as the second condition, or may be set to be different from the second condition, and embodiments of the present disclosure do not impose specific limitations on this.

Therefore, in the data transmission method according to embodiments of the present disclosure, when the configured transmission resource set does not match the resources required for service transmission of the terminal device, such as the configured resource locations are more than the resource locations for service transmission, a part of resources in the transmission resource set can be determined as skippable resources, and the service of the terminal device is not transmitted on the skippable resources. This can avoid the situation where a large number of pre-configured resources become idle or wasted, and avoid excessive power consumption of the terminal devices, thereby increasing resource utilization rate.

The above method 200 can be used in uplink or downlink scenarios. For example, the resources in the transmission resource set can be CG resources and/or SPS resources, and whether the resources are available can be determined based on the locations of the resources.

Considering a scenario where a terminal device performs downlink reception, for the resources not used by the terminal device, the resources can be used by the network device to schedule or transmit data for other terminal devices (to improve resource utilization). Under such condition, the terminal device will not only perform receiving and demodulation of the reference signal at the resource locations, but also perform receiving and demodulation of data. But, in fact, such data is not the data for the terminal device, which will cause unnecessary power loss.

In addition, even if the terminal device detects the DMRS, but the DMRS cannot be demodulated, and the terminal device does not know who the data is for, and will put the data in the HARQ buffer. If the data is not for the terminal device but it is combined with other data in the same HARQ process, this will cause that the data cannot be demodulated (that is, the data should have been demodulated correctly, but the result is that the demodulation at the physical layer fails because the data is combined with data that is not for the terminal device; and, no matter how many times the data is retransmitted, the data cannot be correctly demodulated. This kind of error cannot be solved by the physical layer retransmission).

Therefore, embodiments of the present disclosure propose another data transmission method, which can avoid the situation where resources become idle or wasted, avoid power loss of terminal device, improve resource utilization, avoid storing data that is not for the terminal device itself in the HARQ buffer, and thereby avoid the situation that the data cannot be correctly demodulated due to improper data combination.

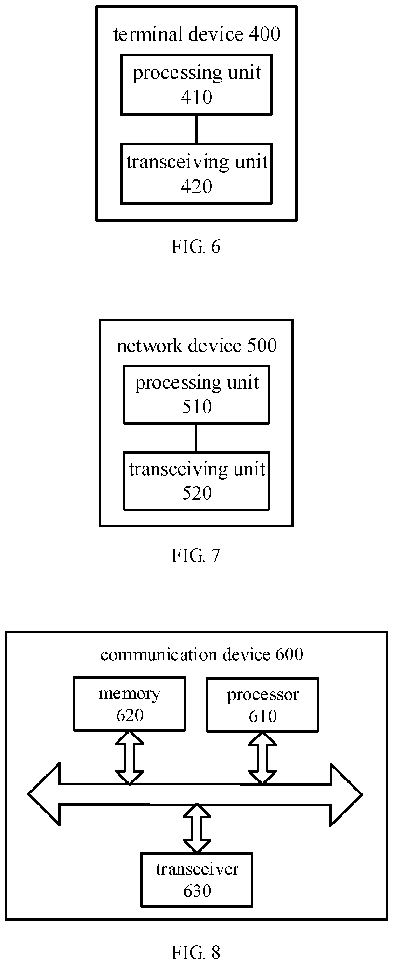

FIG 6 shows a schematic flowchart of a data transmission method 300 according to an embodiment of the present disclosure. As shown in FIG 6, the method 300 includes:

In S310, a DMRS is sent. That is, the network device sends the DMRS to the terminal device, and the terminal device detects the DMRS sent by the network device.

As shown in FIG 6, the method 300 includes:

In S320, data is processed according to the DMRS detection result. According to embodiments, the terminal device determines whether to store the data carried by the PDSCH in the resource corresponding to the DMRS in the corresponding HARQ process according to the detection result of the DMRS.

It should be understood that the method 300 may be performed by a network device and/or a terminal device, the network device may be the network device shown in FIG 1, and the terminal device may be any terminal device shown in FIG. 1.

It should be understood that the terminal device in embodiments of the present disclosure can store the data carried by the PDSCH in the resource corresponding to the DMRS into the corresponding HARQ process according to the detection result of the DMRS; or, terminal device does not store the data carried by the PDSCH in the resource corresponding to the DMRS into the corresponding HARQ process according to the detection result of the DMRS. In embodiments of the present disclosure, the terminal device not storing the data carried by the PDSCH in the corresponding HARQ process may include at least one of the following:
the terminal device does not demodulate and/or receive the PDSCH;
the terminal device demodulates the PDSCH and discards the demodulated data;
the terminal device does not send the received downlink resource information and/or HARQ information to the higher layer; for example, the terminal device does not send the received downlink resource information and /or HARQ information to the MAC layer; for another example, the terminal device does not send the received downlink resource information and/or HARQ information to the HARQ entity.

For example, if the terminal device does not demodulate and/or receive the PDSCH, the data carried by the PDSCH will not be stored in the corresponding HARQ process.

For another example, the terminal device may demodulate the PDSCH, but discard the demodulated data, that is, the demodulated data is not stored in the corresponding HARQ process.

For another example, the downlink resource information received by the terminal device may include downlink configuration and/or downlink assignment.

As an embodiment, S320 in the method 300 may specifically include: if the detection result of the DMRS indicates that the data carried by the PDSCH does not belong to the terminal device, the terminal device does not store the data carried by the PDSCH in the corresponding HARQ process.

As another embodiment, S320 in the method 300 may further specifically include: if the detection result of the DMRS indicates that the data carried by the PDSCH belongs to the terminal device, the terminal device stores the data carried by the PDSCH in the corresponding HARQ process.

As another embodiment, S320 in the method 300 may further specifically include: the terminal device determines whether to store the data carried by the PDSCH in the corresponding HARQ process according to the DMRS detection result and other conditions.

Specifically, with reference to the above method 200, for the transmission resource set configured by the network device for the terminal device, the terminal device may detect the DMRS of all or part of the resources in the transmission resource set, and determine, according to the DMRS detection result and the first condition, whether the resource corresponding to the DMRS is a skippable resource. If the resource is a skippable resource, the data carried by the PDSCH corresponding to the DMRS is not stored in the corresponding HARQ process. The transmission resource set may be the transmission resource set described in the method 200, and the first condition may be the first condition in the above method 200. For brevity, details are not repeated here.

For example, S310 in the method 300 may include: the terminal device may perform DMRS detection on all resources in the transmission resource set. Correspondingly, S320 may include: if the detection result indicates that a part of the resources are not resources for the terminal device, then the terminal device determining that this part of the resources are skippable resources. That is, according to the DMRS detection result, it is determined not to store the data carried by the corresponding PDSCH in the corresponding HARQ process. If the detection result indicates that the part of the resources are the resources for the terminal device, the corresponding data is stored in the HARQ process, or which resources in the part of resources are available resources and which resources in the part of resources are skippable resources are further determined according to the first condition. For skippable resources, the corresponding data is not stored in the HARQ process.

For another example, S320 in the method 300 may further include: when the terminal device satisfies the first condition, the terminal device determining whether to store the data carried by the PDSCH in the corresponding HARQ process according to the detection result of the DMRS. That is to say, the terminal device determines whether to trigger the determination based on the DMRS detection result according to whether the first condition is satisfied.

For another example, S310 in the method 300 may further include: the terminal device detecting the DMRS corresponding to the available resource in the transmission resource set; and not detecting the DMRS corresponding to the skippable resource in the transmission resource set. The transmission resource set is configured by the network device.

According to some embodiments, the terminal device detecting the DMRS corresponding to the available resource in the transmission resource set, and not detecting the DMRS corresponding to the skippable resource in the transmission resource set, may specifically include: if the the terminal device satisfies the first condition, the terminal device detecting the DMRS corresponding to the available resource; and not detecting the DMRS corresponding to the skippable resource. Correspondingly, in S320, the terminal device detects the DMRS on the available resources, and according to the detection result, determines whether to store the corresponding data in the HARQ process.

Specifically, the first condition in the method 300 may include at least one of the following conditions that:
if a period of a first transmission resource group included in a transmission resource set is smaller than or equal to a period of a target service, a skippable resource is determined in the first transmission resource group;
if a period of a first transmission resource group in the transmission resource set is a non-integer multiple of a period of data carried in the PDSCH, a skippable resource is determined in the first transmission resource group;
according to a mapping relationship between resources in a transmission resource set and data of at least one service, if a second transmission resource group in a transmission resource set does not correspond to the data carried by the PDSCH, the second transmission resource group is determined as a skippable resource, wherein data of the at least one service includes the data carried by the PDSCH;
according to a mapping relationship between resources in a transmission resource set and at least one service, if a second transmission resource group in the transmission resource set corresponds to a target service, a skippable resource is determined in the second transmission resource group, wherein the at least one service includes the target service;
according to a mapping relationship between resources in a transmission resource set and at least one logical channel, if a third transmission resource group in the transmission resource set does not correspond to a logical channel where a target service is, the third transmission resource group is determined as a skippable resource, wherein the at least one logical channel includes a logical channel used to carry the target service, or in other words, the at least one logical channel includes a logical channel for carrying a specific priority or identification or a logical channel with a high priority;
according to a mapping relationship between resources in a transmission resource set and at least one logical channel, if a third transmission resource group in the transmission resource set corresponds to a logical channel where a target service is, a skippable resource is determined in the third transmission resource group, wherein the at least one logical channel includes a logical channel used to carry the target service, or in other words, the at least one logical channel includes a logical channel for carrying a specific priority or identification or a logical channel with a high priority;
the resources in the transmission resource set are more than the resources required for the data carried by the PDSCH;
the terminal device receives indication information sent by the network device, wherein the indication information indicates that the terminal device is capable of not receiving data on a part of resources in a transmission resource set;
the terminal device supports not receiving data on a part of resources in the transmission resource set; or
the terminal device sends capability information to the network device, wherein the capability information is used to indicate that the terminal device has a capability of not receiving data on a part of resources in the transmission resource set.

It should be understood that the first condition in the method 300 may be set to include the same or different conditions in different embodiments or under different circumstances; in addition, details of the first condition in the method 300 may be found in the previous description of the first condition in the method 200. For brevity, repeated descriptions are omitted here.

Therefore, in the method for transmitting data in embodiments of the present disclosure, for downlink data, for example, for the scenario of SPS resource transmission, whether to store the corresponding data into the HARQ process is determined according to the DMRS detection result. It is not needed to determine the resource locations, and the method is only related to whether to receive/demodulate the data part (excluding the DMRS part), and whether to put the received data in the HARQ buffer. In this way, the method can avoid the situation where resources become idle or wasted, avoid power loss of terminal device, avoid storing data that is not for the terminal device itself in the HARQ buffer, and thereby avoid the situation that the data cannot be correctly demodulated and improve resource utilization.

It should be understood that, in the various embodiments of the present disclosure, the sequence numbers of the above-mentioned processes does not mean the order of execution, and the execution order of each process should be determined by its function and internal logic. The sequence numbers of the above-mentioned processes should not be interpreted as constituting any limitation on the procedures in various embodiments.

The method for transmitting data according to embodiments of the present disclosure are described in detail above with reference to FIGS. 1 to 6, and the terminal device and network device according to embodiments of the present disclosure will be described below in conjunction with FIGS. 7 to 10.

As shown in FIG. 7, the terminal device according to an embodiment of the present disclosure includes a processing unit 410 and a transceiving unit 420. According to some embodiments, the terminal device 400 is configured to perform the method 200 according to embodiments of the present disclosure.

The processing unit 410 is configured to perform transmission of a target service on an available resource in a transmission resource set by the transceiving unit 420, and not perform transmission of the target service on a skippable resource in the transmission resource set. The transmission resource set includes at least one group of transmission resources, and the at least one group of transmission resources include at least one group of periodic transmission resources configured by a network device and/or at least one group of resources configured by the network device using a resource pattern.

As an embodiment, the processing unit 410 not performing transmission of the target service on the skippable resource in the transmission resource set includes at least one of the following:
determining not to send the target service on the skippable resource;
determining not to receive the target service on the skippable resource;
determining not to detect the target service on the skippable resource; or
determining not to receive a PDSCH corresponding to the target service on the skippable resource (as claimed).

As an embodiment, resources in the transmission resource set are SPS resources and/or CG resources.

As an embodiment, the processing unit 410 is further configured to:
determine whether there exists the skippable resource in the transmission resource set according to reference information, wherein the reference information includes at least one of the following information:
configuration information for the transmission resource set, wherein the configuration information is used to indicate information of resources in the transmission resource set;
a mapping relationship between resources in the transmission resource set and at least one service, wherein the at least one service includes the target service;
a mapping relationship between resources in the transmission resource set and at least one logical channel, wherein the at least one logical channel includes a logical channel for carrying the target service;
a period of the target service;
a detection result of a Demodulation Reference Signal (DMRS) corresponding to resources in the transmission resource set;
whether indication information sent by a network device is received by the transceiving unit 420, wherein the indication information is used by the network device to indicate whether the terminal device is capable of not performing transmission of the target service on a part of resources in the transmission resource set;
whether the terminal device supports not performing transmission of the target service on a part of resources in the transmission resource set; or
whether capability information is sent to the network device by the transceiving unit, wherein the capability information is used to indicate whether the terminal device has a capability of not performing transmission of the target service on a part of resources in the transmission resource set.

As an embodiment, the processing unit 410 is further configured to:
determine the skippable resource in the transmission resource set according to a first condition (as claimed), wherein the first condition includes at least one of the following conditions that:
if a period of a first transmission resource group in the at least one group of periodic transmission resources is smaller than or equal to a period of the target service, the skippable resource is determined in the first transmission resource group;
if a period of a first transmission resource group in the at least one group of periodic transmission resources is a non-integer multiple of a period of the target service, the skippable resource is determined in the first transmission resource group;
according to a mapping relationship between resources in the transmission resource set and at least one service, if a second transmission resource group in the transmission resource set does not correspond to the target service, the second transmission resource group is determined as the skippable resource, wherein the at least one service includes the target service;
according to a mapping relationship between resources in the transmission resource set and at least one service, if a second transmission resource group in the transmission resource set corresponds to the target service, the skippable resource is determined in the second transmission resource group, wherein the at least one service includes the target service;
according to a mapping relationship between resources in the transmission resource set and at least one logical channel, if a third transmission resource group in the transmission resource set does not correspond to a logical channel where the target service is, the third transmission resource group is determined as the skippable resource, wherein the at least one logical channel includes a logical channel used to carry the target service;
according to a mapping relationship between resources in the transmission resource set and at least one logical channel, if a third transmission resource group in the transmission resource set corresponds to a logical channel where the target service is, the skippable resource is determined in the third transmission resource group, wherein the at least one logical channel includes a logical channel used to carry the target service;
a DMRS corresponding to a target resource in the transmission resource set is detected, and if a DMRS detection result indicates that the target resource does not belong to the terminal device, the target resource is determined as the skippable resource;
resources in the transmission resource set are more than resources required by the target service;
indication information sent from the network device is received by the transceiving unit, wherein the indication information indicates that the terminal device is capable of not performing transmission of the target service on a part of resources in the transmission resource set;
the terminal device supports not performing transmission of the target service on a part of resources in the transmission resource set (as claimed); or
capability information is sent to the network device by the transceiving unit 420, wherein the capability information is used to indicate that the terminal device has a capability of not performing transmission of the target service on a part of resources in the transmission resource set.

As an embodiment, the processing unit 410 is configured to perform at least one of the following:
determining the skippable resource in the transmission resource set according to the period of the target service and the period of the at least one group of periodic transmission resources (as claimed);
determining the skippable resource in the transmission resource set according to an amount of resources required by the target service and an amount of resources in the transmission resource set; or
determining the skippable resource in the transmission resource set according to an amount of resources required by the target service and an amount of resources that have been used in the transmission resource set (as claimed).

As an embodiment, resources in the transmission resource set are configured grant resources, and the processing unit 410 is further configured to:
determine not to generate a MAC PDU at a MAC layer, wherein the MAC PDU corresponds to the skippable resource.

As an embodiment, the processing unit 410 is further configured to:
determine not to generate the MAC PDU at the MAC layer according to a second condition, wherein the second condition includes at least one of the following conditions that:
if a period of a first transmission resource group in the at least one group of periodic transmission resources is smaller than or equal to a period of the target service, the skippable resource is determined in the first transmission resource group;
if a period of a first transmission resource group in the at least one group of periodic transmission resources is a non-integer multiple of a period of the target service, the skippable resource is determined in the first transmission resource group;
according to a mapping relationship between resources in the transmission resource set and at least one service, if a second transmission resource group in the transmission resource set does not correspond to the target service, the second transmission resource group is determined as the skippable resource;
according to a mapping relationship between resources in the transmission resource set and at least one service, if a second transmission resource group in the transmission resource set corresponds to the target service, the skippable resource is determined in the second transmission resource group, wherein the at least one service includes the target service;
according to a mapping relationship between resources in the transmission resource set and at least one logical channel, if a third transmission resource group in the transmission resource set does not correspond to a logical channel where the target service is, the third transmission resource group is determined as the skippable resource, wherein the at least one logical channel includes a logical channel used to carry the target service;
according to a mapping relationship between resources in the transmission resource set and at least one logical channel, if a third transmission resource group in the transmission resource set corresponds to a logical channel where the target service is, the skippable resource is determined in the third transmission resource group, wherein the at least one logical channel includes a logical channel used to carry the target service;
a DMRS corresponding to a target resource among resources in the transmission resource set is detected, and if a DMRS detection result indicates that the target resource does not belong to the terminal device, the target resource is determined as the skippable resource;
resources in the transmission resource set are more than resources required by the target service;
indication information sent from the network device is received by the transceiving unit 420, wherein the indication information indicates that the terminal device is capable of not performing transmission of the target service on a part of resources in the transmission resource set;
the terminal device supports not performing transmission of the target service on a part of resources in the transmission resource set; or
capability information is sent to the network device by the transceiving unit 420, wherein the capability information is used to indicate that the terminal device has a capability of not performing transmission of the target service on a part of resources in the transmission resource set.

It should be understood that the above-mentioned and other operations and/or functions of each unit in the terminal device 500 are used to implement the corresponding processes of the terminal device in the method 200 in FIG 4. Repeated descriptions are omitted for brevity.

In the terminal device according to embodiments of the present disclosure, when the configured transmission resource set does not match the resources required for service transmissions of the terminal device, such as the configured resource locations are more than the resource locations for the service transmissions, the terminal device can determine a part of the resources in the transmission resource set as skipped resources, and the service of the terminal device is not transmitted on the skippable resources. This can avoid the situation where a large number of pre-configured resources become idle or wasted, and avoid excessive power consumption of the terminal devices, thereby increasing resource utilization rate.

According to some embodiments, the terminal device 400 may be configured to perform the above method 300. Specifically, the processing unit 410 is configured to detect a DMRS sent from a network device which is received by the transceiving unit; 420
the processing unit 410 is further configured to, according to a detection result of the DMRS, determine whether to store data carried by a PDSCH in a resource corresponding to the DMRS into a corresponding HARQ process.

As an embodiment, the processing unit 410 is configured to:
if the detection result of the DMRS indicates that the data carried by the PDSCH does not belong to the terminal device, not store the data carried by the PDSCH into the corresponding HARQ process.

As an embodiment, the processing unit 410 is configured to:
if the detection result of the DMRS indicates that the data carried by the PDSCH belongs to the terminal device, store the data carried by the PDSCH into the corresponding HARQ process.

As an embodiment, the processing unit 410 is configured to:
in the case that the terminal device satisfies a first condition, determine whether to store the data carried by the PDSCH into the corresponding HARQ process according to the detection result of the DMRS;
wherein the first condition includes at least one of the following conditions that:
   if a period of a first transmission resource group included in a transmission resource set is smaller than or equal to a period of a target service, a skippable resource is determined in the first transmission resource group;
   if a period of a first transmission resource group in at least one group of periodic transmission resources is a non-integer multiple of a period of a target service, a skippable resource is determined in the first transmission resource group;
   according to a mapping relationship between resources in a transmission resource set and data of at least one service, if a second transmission resource group in a transmission resource set does not correspond to the data carried by the PDSCH, the second transmission resource group is determined as a skippable resource, wherein data of the at least one service includes the data carried by the PDSCH;
   according to a mapping relationship between resources in a transmission resource set and at least one service, if a second transmission resource group in the transmission resource set corresponds to a target service, a skippable resource is determined in the second transmission resource group, wherein the at least one service includes the target service;
   according to a mapping relationship between resources in a transmission resource set and at least one logical channel, if a third transmission resource group in the transmission resource set does not correspond to a logical channel where a target service is, the third transmission resource group is determined as a skippable resource, wherein the at least one logical channel includes a logical channel used to carry the target service; resources in the transmission resource set are more than resources required by the data carried by the PDSCH;
   according to a mapping relationship between resources in a transmission resource set and at least one logical channel, if a third transmission resource group in the transmission resource set corresponds to a logical channel where a target service is, a skippable resource is determined in the third transmission resource group, wherein the at least one logical channel includes a logical channel used to carry the target service;
   indication information sent from the network device is received by the transceiving unit 420, wherein the indication information indicates that the terminal device is capable of not receiving data on a part of resources in a transmission resource set;
   the terminal device supports not receiving data on a part of resources in a transmission resource set; or
   capability information is sent to the network device by the transceiving unit 420, wherein the capability information is used to indicate that the terminal device has a capability of not receiving data on a part of resources in the transmission resource set.

As an embodiment, the processing unit 410 is configured to:
detect the DMRS corresponding to an available resource in a transmission resource set; and not detecting the DMRS corresponding to a skippable resource in the transmission resource set, wherein the transmission resource set is configured by the network device.

As an embodiment, the transmission resource set includes at least one group of transmission resources, and the at least one group of transmission resources include at least one group of periodic transmission resources configured by the network device and/or at least one group of resources configured by the network device using a resource pattern.

As an embodiment, the processing unit 410 is configured to:
in the case that a first condition is satisfied, detect the DMRS corresponding to the available resource; and not detect the DMRS corresponding to the skippable resource;
wherein the first condition includes at least one of the following conditions that:
   if a period of a first transmission resource group included in a transmission resource set is smaller than or equal to a period of a target service, a skippable resource is determined in the first transmission resource group;
   if a period of a first transmission resource group in at least one group of periodic transmission resources is a non-integer multiple of a period of a target service, a skippable resource is determined in the first transmission resource group;
   according to a mapping relationship between resources in a transmission resource set and data of at least one service, if a second transmission resource group in a transmission resource set does not correspond to the data carried by the PDSCH, the second transmission resource group is determined as a skippable resource, wherein data of the at least one service includes the data carried by the PDSCH;
   according to a mapping relationship between resources in a transmission resource set and at least one service, if a second transmission resource group in the transmission resource set corresponds to a target service, a skippable resource is determined in the second transmission resource group, wherein the at least one service includes the target service;
   according to a mapping relationship between resources in a transmission resource set and at least one logical channel, if a third transmission resource group in the transmission resource set does not correspond to a logical channel where a target service is, the third transmission resource group is determined as a skippable resource, wherein the at least one logical channel includes a logical channel used to carry the target service; resources in the transmission resource set are more than resources required by the data carried by the PDSCH;
   according to a mapping relationship between resources in a transmission resource set and at least one logical channel, if a third transmission resource group in the transmission resource set corresponds to a logical channel where a target service is, a skippable resource is determined in the third transmission resource group, wherein the at least one logical channel includes a logical channel used to carry the target service;
   indication information sent from the network device is received by the transceiving unit 420, wherein the indication information indicates that the terminal device is capable of not receiving data on a part of resources in a transmission resource set;
   the terminal device supports not receiving data on a part of resources in a transmission resource set; or
   capability information is sent to the network device by the transceiving unit 420, wherein the capability information is used to indicate that the terminal device has a capability of not receiving data on a part of resources in the transmission resource set.

As an embodiment, the processing unit 410 not storing the data carried by the PDSCH into the corresponding HARQ process, includes at least one of:
not demodulating and/or receiving the PDSCH;
demodulating the PDSCH and discarding the demodulated data;
not sending received downlink resource information and/or HARQ information to the MAC layer; or
not sending received downlink resource information and/or HARQ information to a HARQ entity.

It should be understood that the above-mentioned and other operations and/or functions of each unit in the terminal device 500 are used to implement the corresponding processes of the terminal device in the method 300 in FIG 5. Repeated descriptions are omitted for brevity.

Therefore, in the terminal device according to embodiments of the present disclosure, for downlink data, for example, for the scenario of SPS resource transmission, whether to store the corresponding data into the HARQ process is determined according to the DMRS detection result. It is not needed to determine the resource locations, and the method is only related to whether to receive/demodulate the data part (excluding the DMRS part), and whether to put the received data in the HARQ buffer. In this way, the technical solutions can avoid the situation where resources become idle or wasted, avoid power loss of terminal device, avoid storing data that is not for the terminal device itself in the HARQ buffer, and thereby avoid the situation that the data cannot be correctly demodulated and improve resource utilization.

As shown in FIG 6, the network device 600 according to embodiments of the present disclosure includes a processing unit 510 and a transceiving unit 520.

The processing unit 520 is configured to perform, by the transceiving unit 520, transmission of a target service on an available resource in a transmission resource set with a terminal device, and not performing transmission of the target service on a skippable resource in the transmission resource set. The transmission resource set includes at least one group of transmission resources, and the at least one group of transmission resources include at least one group of periodic transmission resources configured by a network device and/or at least one group of resources configured by the network device using a resource pattern.

As an embodiment, the processing unit 510 not performing transmission of the target service on the skippable resource in the transmission resource set includes at least one of the following:
determining not to send the target service on the skippable resource;
determining not to receive the target service on the skippable resource;
determining not to detect the target service on the skippable resource; or
determining not to send a PDSCH corresponding to the target service on the skippable resource.

As an embodiment, resources in the transmission resource set are SPS resources and/or configured grant resources.

As an embodiment, the processing unit 510 is further configured to:
determine whether there exists the skippable resource in the transmission resource set according to reference information, wherein the reference information includes at least one of the following information:
configuration information for the transmission resource set, wherein the configuration information is used to indicate parameters or information for resources in the transmission resource set;
a mapping relationship between resources in the transmission resource set and at least one service, wherein the at least one service includes the target service;
a mapping relationship between resources in the transmission resource set and at least one logical channel, wherein the at least one logical channel includes a logical channel for carrying the target service;
a period of the target service;
whether indication information is sent to the terminal device by the transceiving unit 520, wherein the indication information is used by the network device to indicate whether the terminal device is capable of not performing transmission of the target service on a part of resources in the transmission resource set; or
whether capability information sent from the terminal device is received by the transceiving unit 520, wherein the capability information is used to indicate whether the terminal device has a capability of not performing transmission of the target service on a part of resources in the transmission resource set.

As an embodiment, the processing unit 510 is further configured to:
determine the skippable resource in the transmission resource set according to a first condition, wherein the first condition includes at least one of the following conditions that:
if a period of a first transmission resource group in the at least one group of periodic transmission resources is smaller than or equal to a period of the target service, the skippable resource is determined in the first transmission resource group;
if a period of a first transmission resource group in the at least one group of periodic transmission resources is a non-integer multiple of a period of the target service, the skippable resource is determined in the first transmission resource group;
according to a mapping relationship between resources in the transmission resource set and at least one service, if a second transmission resource group in the transmission resource set does not correspond to the target service, the second transmission resource group is determined as the skippable resource, wherein the at least one service includes the target service;
according to a mapping relationship between resources in the transmission resource set and at least one service, if a second transmission resource group in the transmission resource set corresponds to the target service, the skippable resource is determined in the second transmission resource group, wherein the at least one service includes the target service;
according to a mapping relationship between resources in the transmission resource set and at least one logical channel, if a third transmission resource group in the transmission resource set does not correspond to a logical channel where the target service is, the third transmission resource group is determined as the skippable resource, wherein the at least one logical channel includes a logical channel used to carry the target service;
according to a mapping relationship between resources in the transmission resource set and at least one logical channel, if a third transmission resource group in the transmission resource set corresponds to a logical channel where the target service is, the skippable resource is determined in the third transmission resource group, wherein the at least one logical channel includes a logical channel used to carry the target service;
resources in the transmission resource set are more than resources required by the target service;
indication information is sent to the terminal device by the transceiving unit 520, wherein the indication information indicates that the terminal device is capable of not performing transmission of the target service on a part of resources in the transmission resource set; or
capability information sent from the terminal device is received by the transceiving unit 520, wherein the capability information is used to indicate that the terminal device has a capability of not performing transmission of the target service on a part of resources in the transmission resource set.

As an embodiment, the processing unit 510 is configured to perform at least one of the following:
determining the skippable resource in the transmission resource set according to the period of the target service and the period of the at least one group of periodic transmission resources;
determining the skippable resource in the transmission resource set according to an amount of resources required by the target service and an amount of resources in the transmission resource set; or
determining the skippable resource in the transmission resource set according to an amount of resources required by the target service and an amount of resources that have been used in the transmission resource set.

It should be understood that the above-mentioned and other operations and/or functions of each unit in the network device 500 are used to implement the corresponding processes of the network device in the method 200 in FIG 4. Repeated descriptions are omitted for brevity.

In the network device according to embodiments of the present disclosure, when the transmission resource set configured for the terminal device does not match the resources required for service transmissions of the terminal device, such as the configured resource locations are more than the resource locations for the service transmissions, a part of the resources in the transmission resource set can be determined as skipped resources, and the service of the terminal device is not transmitted on the skippable resources. This can avoid the situation where a large number of pre-configured resources become idle or wasted, and avoid excessive power consumption of the terminal devices, thereby increasing resource utilization rate.

FIG 8 is a schematic structural diagram of a communication device 600 according to an embodiment of the present disclosure. The communication device 600 shown in FIG 8 includes a processor 610, and the processor 610 may call and run a computer program from a memory to perform the method in embodiments of the present disclosure.

According to embodiments, as shown in FIG 8, the communication device 600 may further include a memory 620. The processor 610 may call and run a computer program from the memory 620 to perform the method in embodiments of the present disclosure.

The memory 620 may be a separate device independent of the processor 610, or may be integrated in the processor 610.

According to embodiments, as shown in FIG 8, the communication device 600 may further include a transceiver 630, and the processor 610 may control the transceiver 630 to communicate with other devices. Specifically, the transceiver may send information or data to other devices, or receive information or data sent by other devices.

The transceiver 630 may include a transmitter and a receiver. The transceiver 630 may further include one or more antennas.

According to embodiments, the communication device 600 may specifically be the network device according to an embodiment of the present disclosure, and the communication device 600 may implement the corresponding processes implemented by the network device in the method embodiments of the present disclosure. For brevity, details are not repeated here.

According to embodiments, the communication device 600 may specifically be the mobile terminal/terminal device in embodiments of the present disclosure, and the communication device 600 may implement the corresponding processes implemented by the mobile terminal/terminal device in the method embodiments of the present disclosure. For brevity, details are not repeated here.

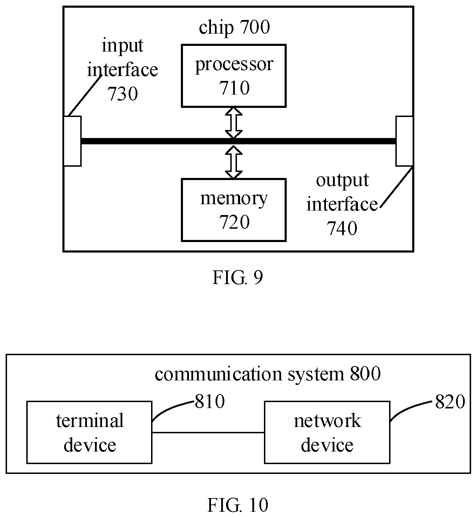

FIG 9 is a schematic structural diagram of a chip according to an embodiment of the present disclosure. The chip 700 shown in FIG 9 includes a processor 710, and the processor 710 can call and run a computer program from a memory to implement the method according to embodiments of the present disclosure.

According to embodiments, as shown in FIG 9, the chip 700 may further include a memory 720. The processor 710 may call and run a computer program from the memory 720 to implement the method according to embodiments of the present disclosure.

The memory 720 may be a separate device independent of the processor 710, or may be integrated in the processor 710.

According to embodiments, the chip 700 may further include an input interface 730. The processor 710 may control the input interface 730 to communicate with other devices or chips, and specifically, the processor 710 can control the input interface to obtain information or data sent by other devices or chips.

According to embodiments, the chip 700 may further include an output interface 740. The processor 710 can control the output interface 740 to communicate with other devices or chips, and specifically, the processor 710 can control the output interface 740 to output information or data to other devices or chips.

According to embodiments, the chip can be applied to the network device in embodiments of the present disclosure, and the chip can implement the corresponding processes implemented by the network device in various methods according to embodiments of the present disclosure. For brevity, details are not repeated herein again.

According to embodiments, the chip can be applied to the mobile terminal/terminal device in embodiments of the present disclosure, and the chip can implement the corresponding processes implemented by the mobile terminal/terminal device in various methods according to embodiments of the present disclosure. For brevity, details are not repeated herein again.

It should be understood that the chip in the embodiments of the present disclosure may also be referred to as a system-level chip, a system chip, a chip system, or a system-on-chip, etc.

FIG. 10 is a schematic block diagram of a communication system 800 according to an embodiment of the present disclosure. As shown in FIG. 10, the communication system 800 includes a terminal device 810 and a network device 820.

The terminal device 810 may be used to implement the corresponding functions implemented by the terminal device in the foregoing methods, and the network device 820 may be used to implement the corresponding functions implemented by the network device in the foregoing methods. For brevity, details are not repeated herein again.

It should be understood that the processor in embodiments of the present disclosure may be an integrated circuit chip with signal processing capability. In implementations, the steps of the foregoing method embodiments can be completed by hardware integrated logic circuits in the processor or instructions in the form of software. The above-mentioned processor may be a general-purpose processor, a Digital Signal Processor (DSP), an Application Specific Integrated Circuit (ASIC), a Field Programmable Gate Array (FPGA) or other programmable logic device, discrete gate or transistor logic device, discrete hardware component. The methods, steps, and logical block diagrams disclosed in the embodiments of the present disclosure can be implemented or executed. The general-purpose processor may be a microprocessor or the processor may also be any conventional processor or the like. The steps of the methods disclosed in the embodiments of the present disclosure may be directly embodied as being executed and completed by a hardware decoding processor, or executed by a combination of hardware and software modules in the decoding processor. The software module can be located in a storage medium in the field, such as random access memory, flash memory, read-only memory, programmable read-only memory, or electrically erasable programmable memory, register. The storage medium is located in the memory, and the processor reads the information in the memory to perform the steps of the above methods in combination with hardware.

It can be understood that the memory in the embodiments of the present disclosure may be volatile memory or non-volatile memory, or may include both volatile and non-volatile memory. The non-volatile memory can be Read-Only Memory (ROM), Programmable ROM (PROM), Erasable PROM (EPROM), Electrically EPROM (EEPROM) or flash memory. The volatile memory may be a Random Access Memory (RAM), which is used as an external cache. By way of exemplary rather than limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM)), or Direct Rambus RAM (DR RAM). It should be noted that the memory in the systems and methods described in the present disclosure is intended to include but not limited to these and any other suitable types of memory.

It should be understood that the foregoing memory is exemplary but not restrictive. For example, the memory in embodiments of the present disclosure may also be Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), or Direct Rambus RAM (DR RAM), and so on. That is to say, the memory in embodiments of the present disclosure is intended to include but not limited to these and any other suitable types of memory.

An embodiment of the present disclosure also provides a computer-readable storage medium for storing computer programs.

According to embodiments, the computer-readable storage medium may be applied to the network device in embodiments of the present disclosure, and the computer programs cause a computer to perform the corresponding processes implemented by the network device in each method embodiment of the present disclosure. For brevity, repeated descriptions are omitted here.

According to embodiments, the computer-readable storage medium may be applied to the mobile terminal/terminal device in embodiments of the present disclosure, and the computer programs cause a computer to perform the corresponding processes implemented by the mobile terminal/terminal device in each method embodiment of the present disclosure. For brevity, repeated descriptions are omitted here.

An embodiment of the present disclosure provides a computer program product, including computer program instructions.

According to embodiments, the computer program product may be applied to the network device in embodiments of the present disclosure, and the computer program instructions cause a computer to perform the corresponding processes implemented by the network device in each method embodiment of the present disclosure. For brevity, repeated descriptions are omitted here.

According to embodiments, the computer program product may be applied to the mobile terminal/terminal device in embodiments of the present disclosure, and the computer program instructions cause a computer to perform the corresponding processes implemented by the mobile terminal/terminal device in each method embodiment of the present disclosure. For brevity, repeated descriptions are omitted here.

An embodiment of the present disclosure also provides a computer program.

According to embodiments, the computer program may be applied to the network device in embodiments of the present disclosure, and when the computer program runs on a computer, the computer is caused to perform the corresponding processes implemented by the network device in each method embodiment of the present disclosure. For brevity, repeated descriptions are omitted here.

According to embodiments, the computer program may be applied to the mobile terminal/terminal device in embodiments of the present disclosure, and when the computer program runs on a computer, the computer is caused to perform the corresponding processes implemented by the mobile terminal/terminal device in each method embodiment of the present disclosure. For brevity, repeated descriptions are omitted here.

Those of ordinary skill in the art will appreciate that the exemplary units and algorithm steps described according to embodiments disclosed herein can be carried out by electronic hardware or a combination of electronic hardware and computer software. Whether the functions are implemented by hardware or software depends on particular applications and design constraints of the technical solutions. For each of the particular applications, a person skilled in the art can use different methods to implement the described functions, but such implementation should not be considered as beyond the scope of the present disclosure.

It may be clearly understood by those skilled in the art that details of specific operation procedures of the systems, devices and units can be found in the previous description regarding the method embodiments.

In the embodiments provided in the present disclosure, it should be understood that the disclosed systems, devices and methods may be implemented in other ways. For example, the device embodiments described above are merely illustrative. For example, the division of the units is only a kind of logical function division. In practice, other division manner may be used. For example, multiple units or components may be combined or integrated into another system, or some features may be ignored or not performed. In addition, the illustrated or discussed mutual coupling or direct coupling or communication connection may be indirect coupling or communication connection through some interfaces, devices or units, and may be in electrical, mechanical or other forms.

The units described as separated parts may or may not be physically separated, and the parts displayed as units may or may not be physical units, that is, the units may be located in one place, or may be distributed over multiple network units. Some or all of the units may be selected according to actual needs to achieve the objectives of the solutions in the embodiments.

In addition, the functional units in the embodiments of the present disclosure may be integrated in one processing unit, or the units may exist alone physically, or two or more units may be integrated in one unit.

The functions may also be stored in a computer-readable storage medium if being implemented in the form of a software functional unit and sold or used as an independent product. Based on such understanding, the essence of the technical solutions of the present disclosure, or the part contributing to the prior art or part of the technical solutions, may be embodied in the form of a software product. The computer software product is stored in a storage medium including a number of instructions such that a computer device (which may be a personal computer, a server, or a network device, etc.) performs all or part of steps of the method described in each of the embodiments of the present disclosure. The foregoing storage medium includes: any medium that is capable of storing program codes such as a USB disk, a mobile hard disk, a Read-Only Memory (ROM), a Random Access Memory (RAM), a magnetic disk or an optical disk, and the like.

## Claims

1. A data transmission method, comprising:
determining, by a terminal device, whether there exists a skippable resource in a transmission resource set, which is semi-statically scheduled by a network device, according to reference information, wherein resources in the transmission resource set are Semi-Persistent Scheduling ,SPS, resources configured by the network device for the terminal device;
receiving, by the terminal device, a Physical Downlink Shared Channel, PDSCH, corresponding to a target service on an available resource in the transmission resource set, and determining not to receive, by the terminal device, the PDSCH, corresponding to the target service on the determined skippable resource in the transmission resource set;
wherein the method further comprises:
determining, by the terminal device, the skippable resource in the transmission resource set according to a first condition, wherein the first condition comprises that:
the terminal device supports not receiving the target service on a part of resources in the transmission resource set;
wherein determining, by the terminal device, the skippable resource in the transmission resource set according to the first condition comprises at least one of the following:
determining the skippable resource in the transmission resource set according to a period of the target service and a period of the at least one group of periodic transmission resources; or
determining the skippable resource in the transmission resource set according to an amount of resources required by the target service and an amount of resources that have been used in the transmission resource set.

2. A data transmission method, comprising:
determining, by a network device, whether there exists a skippable resource in a transmission resource set, which is semi-statically scheduled by a network device, according to reference information, wherein resources in the transmission resource set are Semi-Persistent Scheduling, SPS, resources;
sending, by the network device, a Physical Downlink Shared Channel, PDSCH, corresponding to a target service on an available resource in the transmission resource set to a terminal device, and determining, by the network device, not to send the PDSCH corresponding to the target service on the skippable resource in the transmission resource set;
wherein the method further comprises:
determining, by the network device, the skippable resource in the transmission resource set according to a first condition, wherein the first condition comprises that:
the network device receives capability information sent from the terminal device, wherein the capability information is used to indicate that the terminal device has a capability of not receiving the target service on a part of resources in the transmission resource set;
wherein determining, by the network device, the skippable resource in the transmission resource set according to the first condition comprises at least one of the following:
determining the skippable resource in the transmission resource set according to a period of the target service and a period of the at least one group of periodic transmission resources;
determining the skippable resource in the transmission resource set according to an amount of resources required by the target service and an amount of resources that have been used in the transmission resource set.

3. A terminal device (400), comprising a processing unit (410) and a transceiving unit (420);
wherein the processing unit is configured to determine whether there exists a skippable resource in a transmission resource set, which is semi-statically scheduled by a network device, according to reference information, wherein resources in the transmission resource set are Semi-Persistent Scheduling, SPS, resources configured by the network device for the terminal device;
wherein the transceiving unit is configured to receive a Physical Downlink Shared Channel, PDSCH, corresponding to a target service on an available resource in the transmission resource set, and determining not to receive, by the terminal device, the PDSCH, corresponding to the target service on the determined skippable resource in the transmission resource set;
wherein the processing unit is further configured to:
determine the skippable resource in the transmission resource set according to a first condition, wherein the first condition comprises that:
the terminal device supports not receiving the target service on a part of resources in the transmission resource set;
wherein determining of the skippable resource in the transmission resource set according to the first condition comprises at least one of the following:
determining the skippable resource in the transmission resource set according to a period of the target service and a period of the at least one group of periodic transmission resources; or
determining the skippable resource in the transmission resource set according to an amount of resources required by the target service and an amount of resources that have been used in the transmission resource set.

4. A network device (500), comprising a processing unit (510) and a transceiving unit (520);
wherein the processing unit is configured to determine whether there exists a skippable resource in a transmission resource set, which is semi-statically scheduled by a network device, according to reference information, wherein resources in the transmission resource set are Semi-Persistent Scheduling, SPS, resources;
wherein the transceiving unit is configured to send a Physical Downlink Shared Channel, PDSCH, corresponding to a target service on an available resource in the transmission resource set to a terminal device, and not to send the PDSCH corresponding to the target service on the skippable resource in the transmission resource set;
wherein the processing unit is configured to:
determine the skippable resource in the transmission resource set according to a first condition, wherein the first condition comprises that:
the network device receives capability information sent from the terminal device, wherein the capability information is used to indicate that the terminal device has a capability of not receiving the target service on a part of resources in the transmission resource set;
wherein determining of the skippable resource in the transmission resource set according to the first condition comprises at least one of the following:
determining the skippable resource in the transmission resource set according to a period of the target service and a period of the at least one group of periodic transmission resources;
determining the skippable resource in the transmission resource set according to an amount of resources required by the target service and an amount of resources that have been used in the transmission resource set.

## Patentansprüche

1. Datenübertragungsverfahren, umfassend:
Bestimmen, durch eine Endgerätvorrichtung, ob ein überspringbares Betriebsmittel in einem Übertragungsbetriebsmittelsatz existiert, das durch eine Netzwerkvorrichtung semistatisch terminiert ist, gemäß Referenzinformationen, wobei Betriebsmittel in dem Übertragungsbetriebsmittelsatz semipersistente Terminierungs- bzw. SPS-Betriebsmittel sind, konfiguriert durch die Netzwerkvorrichtung für die Endgerätvorrichtung;
Empfangen, durch die Endgerätvorrichtung, eines physikalischen geteilten Abwärtsstreckenkanals, PDSCH, korrespondierend mit einem Zieldienst auf einem verfügbaren Betriebsmittel in dem Übertragungsbetriebsmittelsatz und Bestimmen, durch die Endgerätvorrichtung, den PDSCH korrespondierend mit dem Zieldienst auf dem bestimmten überspringbaren Betriebsmittel in dem Übertragungsbetriebsmittelsatz nicht zu empfangen;
wobei das Verfahren ferner umfasst:
Bestimmen, durch die Endgerätvorrichtung, des überspringbaren Betriebsmittels in dem Übertragungsbetriebsmittelsatz gemäß einer ersten Bedingung, wobei die erste Bedingung umfasst, dass:
die Endgerätvorrichtung unterstützt, den Zieldienst auf einem Betriebsmittelteil in dem Übertragungsbetriebsmittelsatz nicht zu empfangen;
wobei Bestimmen, durch die Endgerätvorrichtung, des überspringbaren Betriebsmittels in dem Übertragungsbetriebsmittelsatz gemäß der ersten Bedingung mindestens eines des Folgenden umfasst:
Bestimmen des überspringbaren Betriebsmittels in dem Übertragungsbetriebsmittelsatz gemäß einer Periode des Zieldienstes und einer Periode der mindestens einen Gruppe von Betriebsmitteln für periodische Übertragung; oder
Bestimmen des überspringbaren Betriebsmittels in dem Übertragungsbetriebsmittelsatz gemäß einer Menge von Betriebsmitteln, die durch den Zieldienst benötigt werden, und einer Menge von Betriebsmitteln, die in dem Übertragungsbetriebsmittelsatz verwendet wurden.

2. Datenübertragungsverfahren, umfassend:
Bestimmen, durch eine Netzwerkvorrichtung, ob ein überspringbares Betriebsmittel in einem Übertragungsbetriebsmittelsatz existiert, das durch eine Netzwerkvorrichtung semistatisch terminiert ist, gemäß Referenzinformationen, wobei Betriebsmittel in dem Übertragungsbetriebsmittelsatz semipersistente Terminierungs- bzw. SPS-Betriebsmittel sind;
Senden, durch die Netzwerkvorrichtung, eines physikalischen geteilten Abwärtsstreckenkanals, PDSCH, korrespondierend mit einem Zieldienst auf einem verfügbaren Betriebsmittel in dem Übertragungsbetriebsmittelsatz an eine Endgerätvorrichtung und Bestimmen, durch die Netzwerkvorrichtung, den PDSCH korrespondierend mit dem Zieldienst auf dem überspringbaren Betriebsmittel in dem Übertragungsbetriebsmittelsatz nicht zu senden;
wobei das Verfahren ferner umfasst:
Bestimmen, durch die Netzwerkvorrichtung, des überspringbaren Betriebsmittels in dem Übertragungsbetriebsmittelsatz gemäß einer ersten Bedingung, wobei die erste Bedingung umfasst, dass:
die Netzwerkvorrichtung von der Endgerätvorrichtung gesandte Fähigkeitsinformationen empfängt, wobei die Fähigkeitsinformationen verwendet werden, anzugeben, dass die Endgerätvorrichtung eine Fähigkeit aufweist, den Zieldienst auf einem Betriebsmittelteil in dem Übertragungsbetriebsmittelsatz nicht zu empfangen;
wobei Bestimmen, durch die Netzwerkvorrichtung, des überspringbaren Betriebsmittels in dem Übertragungsbetriebsmittelsatz gemäß der ersten Bedingung mindestens eines des Folgenden umfasst:
Bestimmen des überspringbaren Betriebsmittels in dem Übertragungsbetriebsmittelsatz gemäß einer Periode des Zieldienstes und einer Periode der mindestens einen Gruppe von Betriebsmitteln für periodische Übertragung;
Bestimmen des überspringbaren Betriebsmittels in dem Übertragungsbetriebsmittelsatz gemäß einer Menge von Betriebsmitteln, die durch den Zieldienst benötigt werden, und einer Menge von Betriebsmitteln, die in dem Übertragungsbetriebsmittelsatz verwendet wurden.

3. Endgerätvorrichtung (400), umfassend eine Verarbeitungseinheit (410) und eine Sende-/Empfangseinheit (420);
wobei die Verarbeitungseinheit konfiguriert ist zum Bestimmen, ob ein überspringbares Betriebsmittel in einem Übertragungsbetriebsmittelsatz existiert, das durch eine Netzwerkvorrichtung semistatisch terminiert ist, gemäß Referenzinformationen, wobei Betriebsmittel in dem Übertragungsbetriebsmittelsatz semipersistente Terminierungs- bzw. SPS-Betriebsmittel sind, konfiguriert durch die Netzwerkvorrichtung für die Endgerätvorrichtung;
wobei die Sende-/Empfangseinheit konfiguriert ist zum Empfangen eines physikalischen geteilten Abwärtsstreckenkanals, PDSCH, korrespondierend mit einem Zieldienst auf einem verfügbaren Betriebsmittel in dem Übertragungsbetriebsmittelsatz und Bestimmen, durch die Endgerätvorrichtung, den PDSCH korrespondierend mit dem Zieldienst auf dem bestimmten überspringbaren Betriebsmittel in dem Übertragungsbetriebsmittelsatz nicht zu empfangen;
wobei die Verarbeitungseinheit ferner konfiguriert ist zum:
Bestimmen des überspringbaren Betriebsmittels in dem Übertragungsbetriebsmittelsatz gemäß einer ersten Bedingung, wobei die erste Bedingung umfasst, dass:
die Endgerätvorrichtung unterstützt, den Zieldienst auf einem Betriebsmittelteil in dem Übertragungsbetriebsmittelsatz nicht zu empfangen;
wobei Bestimmen des überspringbaren Betriebsmittels in dem Übertragungsbetriebsmittelsatz gemäß der ersten Bedingung mindestens eines des Folgenden umfasst:
Bestimmen des überspringbaren Betriebsmittels in dem Übertragungsbetriebsmittelsatz gemäß einer Periode des Zieldienstes und einer Periode der mindestens einen Gruppe von Betriebsmitteln für periodische Übertragung; oder
Bestimmen des überspringbaren Betriebsmittels in dem Übertragungsbetriebsmittelsatz gemäß einer Menge von Betriebsmitteln, die durch den Zieldienst benötigt werden, und einer Menge von Betriebsmitteln, die in dem Übertragungsbetriebsmittelsatz verwendet wurden.

4. Netzwerkvorrichtung (500), umfassend eine Verarbeitungseinheit (510) und eine Sende-/Empfangseinheit (520);
wobei die Verarbeitungseinheit konfiguriert ist zum Bestimmen, ob ein überspringbares Betriebsmittel in einem Übertragungsbetriebsmittelsatz existiert, das durch eine Netzwerkvorrichtung semistatisch terminiert ist, gemäß Referenzinformationen, wobei Betriebsmittel in dem Übertragungsbetriebsmittelsatz semipersistente Terminierungs- bzw. SPS-Betriebsmittel sind;
wobei die Sende-/Empfangseinheit konfiguriert ist, einen physikalischen geteilten Abwärtsstreckenkanal, PDSCH, korrespondierend mit einem Zieldienst auf einem verfügbaren Betriebsmittel in dem Übertragungsbetriebsmittelsatz an eine Endgerätvorrichtung zu senden und den PDSCH korrespondierend mit dem Zieldienst auf dem überspringbaren Betriebsmittel in dem Übertragungsbetriebsmittelsatz nicht zu senden;
wobei die Verarbeitungseinheit konfiguriert ist zum:
Bestimmen des überspringbaren Betriebsmittels in dem Übertragungsbetriebsmittelsatz gemäß einer ersten Bedingung, wobei die erste Bedingung umfasst, dass:
die Netzwerkvorrichtung von der Endgerätvorrichtung gesandte Fähigkeitsinformationen empfängt, wobei die Fähigkeitsinformationen verwendet werden, anzugeben, dass die Endgerätvorrichtung eine Fähigkeit aufweist, den Zieldienst auf einem Betriebsmittelteil in dem Übertragungsbetriebsmittelsatz nicht zu empfangen;
wobei Bestimmen des überspringbaren Betriebsmittels in dem Übertragungsbetriebsmittelsatz gemäß der ersten Bedingung mindestens eines des Folgenden umfasst:
Bestimmen des überspringbaren Betriebsmittels in dem Übertragungsbetriebsmittelsatz gemäß einer Periode des Zieldienstes und einer Periode der mindestens einen Gruppe von Betriebsmitteln für periodische Übertragung;
Bestimmen des überspringbaren Betriebsmittels in dem Übertragungsbetriebsmittelsatz gemäß einer Menge von Betriebsmitteln, die durch den Zieldienst benötigt werden, und einer Menge von Betriebsmitteln, die in dem Übertragungsbetriebsmittelsatz verwendet wurden.

## Revendications

1. Procédé de transmission de données, comprenant :
la détermination, par un dispositif terminal, s'il existe une ressource pouvant être ignorée dans un ensemble de ressources de transmission, qui est planifié de manière semi-statique par un dispositif de réseau, en fonction d'informations de référence, des ressources dans l'ensemble de ressources de transmission étant des ressources de planification semi-persistante, SPS,
configurées par le dispositif de réseau pour le dispositif terminal ;
la réception, par le dispositif terminal, d'un canal partagé de liaison descendante physique, PDSCH, correspondant à un service cible sur une ressource disponible dans l'ensemble de ressources de transmission, et la détermination de ne pas recevoir, par le dispositif terminal, le PDSCH correspondant au service cible sur la ressource pouvant être ignorée déterminée dans l'ensemble de ressources de transmission ;
le procédé comprenant en outre :
la détermination, par le dispositif terminal, de la ressource pouvant être ignorée dans l'ensemble de ressources de transmission en fonction d'une première condition, la première condition comprenant que :
le dispositif terminal prend en charge de ne pas recevoir le service cible sur une partie des ressources dans l'ensemble de ressources de transmission ;
la détermination, par le dispositif terminal, de la ressource pouvant être ignorée dans l'ensemble de ressources de transmission en fonction de la première condition comprenant au moins l'une parmi :
la détermination de la ressource pouvant être ignorée dans l'ensemble de ressources de transmission en fonction d'une période du service cible et d'une période de l'au moins un groupe de ressources de transmission périodique ; ou
la détermination de la ressource pouvant être ignorée dans l'ensemble de ressources de transmission en fonction d'une quantité de ressources requises par le service cible et d'une quantité de ressources qui ont été utilisées dans l'ensemble de ressources de transmission.

2. Procédé de transmission de données, comprenant :
la détermination, par un dispositif de réseau, s'il existe une ressource pouvant être ignorée dans un ensemble de ressources de transmission, qui est planifié de manière semi-statique par un dispositif de réseau, en fonction d'informations de référence, des ressources dans l'ensemble de ressources de transmission étant des ressources de planification semi-persistante, SPS ;
l'envoi, par le dispositif de réseau, d'un canal partagé de liaison descendante physique, PDSCH, correspondant à un service cible sur une ressource disponible dans l'ensemble de ressources de transmission à un dispositif terminal, et la détermination, par le dispositif de réseau, de ne pas envoyer le PDSCH correspondant au service cible sur la ressource pouvant être ignorée dans l'ensemble de ressources de transmission ;
le procédé comprenant en outre :
la détermination, par le dispositif de réseau, de la ressource pouvant être ignorée dans l'ensemble de ressources de transmission en fonction d'une première condition, la première condition comprenant que :
le dispositif de réseau reçoit des informations de capacité envoyées par le dispositif terminal, les informations de capacité étant utilisées pour indiquer que le dispositif terminal a une capacité de ne pas recevoir le service cible sur une partie des ressources dans l'ensemble de ressources de transmission ;
la détermination, par le dispositif de réseau, de la ressource pouvant être ignorée dans l'ensemble de ressources de transmission en fonction de la première condition comprenant au moins l'une parmi :
la détermination de la ressource pouvant être ignorée dans l'ensemble de ressources de transmission en fonction d'une période du service cible et d'une période de l'au moins un groupe de ressources de transmission périodique ;
la détermination de la ressource pouvant être ignorée dans l'ensemble de ressources de transmission en fonction d'une quantité de ressources requises par le service cible et d'une quantité de ressources qui ont été utilisées dans l'ensemble de ressources de transmission.

3. Dispositif terminal (400), comprenant une unité de traitement (410) et une unité d'émission-réception (420) ;
l'unité de traitement étant configurée pour déterminer s'il existe une ressource pouvant être ignorée dans un ensemble de ressources de transmission, qui est planifié de manière semi-statique par un dispositif de réseau, en fonction d'informations de référence, des ressources de l'ensemble de ressources de transmission étant des ressources de planification semi-persistante, SPS, configurées par le dispositif de réseau pour le dispositif terminal ;
l'unité d'émission-réception étant configurée pour recevoir un canal partagé de liaison descendante physique, PDSCH, correspondant à un service cible sur une ressource disponible dans l'ensemble de ressources de transmission, et déterminer de ne pas recevoir, par le dispositif terminal, le PDSCH, correspondant au service cible sur la ressource pouvant être ignorée déterminée dans l'ensemble de ressources de transmission ;
l'unité de traitement étant en outre configurée pour :
déterminer la ressource pouvant être ignorée dans l'ensemble de ressources de transmission en fonction d'une première condition, la première condition comprenant que:
le dispositif terminal prend en charge de ne pas recevoir le service cible sur une partie des ressources dans l'ensemble de ressources de transmission ;
la détermination de la ressource pouvant être ignorée dans l'ensemble de ressources de transmission en fonction de la première condition comprenant au moins l'une parmi : la détermination de la ressource pouvant être ignorée dans l'ensemble de ressources de transmission en fonction d'une période du service cible et d'une période de l'au moins un groupe de ressources de transmission périodique ; ou
la détermination de la ressource pouvant être ignorée dans l'ensemble de ressources de transmission en fonction d'une quantité de ressources requises par le service cible et d'une quantité de ressources qui ont été utilisées dans l'ensemble de ressources de transmission.

4. Dispositif de réseau (500), comprenant une unité de traitement (510) et une unité d'émission-réception (520) ;
l'unité de traitement étant configurée pour déterminer s'il existe une ressource pouvant être ignorée dans un ensemble de ressources de transmission, qui est planifiée de manière semi-statique par un dispositif de réseau, en fonction d'informations de référence, des ressources de l'ensemble de ressources de transmission étant des ressources de planification semi-persistante, SPS ;
l'unité d'émission-réception étant configurée pour envoyer un canal partagé de liaison descendante physique, PDSCH, correspondant à un service cible sur une ressource disponible dans l'ensemble de ressources de transmission à un dispositif terminal, et pour ne pas envoyer le PDSCH correspondant au service cible sur la ressource pouvant être ignorée dans l'ensemble de ressources de transmission ;
l'unité de traitement étant configurée pour :
déterminer la ressource pouvant être ignorée dans l'ensemble de ressources de transmission en fonction d'une première condition, la première condition comprenant que :
le dispositif de réseau reçoit des informations de capacité envoyées par le dispositif terminal, les informations de capacité étant utilisées pour indiquer que le dispositif terminal a une capacité de ne pas recevoir le service cible sur une partie des ressources dans l'ensemble de ressources de transmission ;
la détermination de la ressource pouvant être ignorée dans l'ensemble de ressources de transmission en fonction de la première condition comprenant au moins l'une parmi : la détermination de la ressource pouvant être ignorée dans l'ensemble de ressources de transmission en fonction d'une période du service cible et d'une période de l'au moins un groupe de ressources de transmission périodique ; la détermination de la ressource pouvant être ignorée dans l'ensemble de ressources de transmission en fonction d'une quantité de ressources requises par le service cible et d'une quantité de ressources qui ont été utilisées dans l'ensemble de ressources de transmission.
